# EUROPÄISCHE PATENTANMELDUNG

(11) **EP 2 194 339 A2**
(43) Veröffentlichungstag der Anmeldung: **09.06.2010**
(21) Anmeldenummer: 09177944.7
(22) Anmeldetag: 03.12.2009
(51) Int. Cl.: F24J 2/52, E04D 3/36, E04D 12/00, E04C 3/04, E04D 3/361

(54) **Hutprofil**

(30) Priorität: 05.12.2008 DE 102008044380; 15.05.2009 DE 102009003167
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Ein Montagesystem 10 zum Anbringen von Solarmodulen auf einem Flachdach weist mehrere Holzbohlen 11 auf, die auf einer Abdeckfolie 21 des Flachdachs 20 liegen und beispielsweise mittels Schrauben 12 am Flachdach 20 befestigt werden. Außerdem weist das System ein Profil 30 auf, das ebenfalls auf der Dachfolie 21 angeordnet ist. Das Profil überspannt die Holzbohle 11. Folienendbereiche beidseitig des Profils 30 angeordneter Folien 13a und 13b sind über Verschweißungen 34 mit seitlichen Flansche 35a und 35b des Profils 30 wasserdicht verbunden.

## Beschreibung

### GEBIET DER ERFINDUNG

Die vorliegende Erfindung betrifft ein Montagesystem zur Montage von Solarmodulen auf der Dachabdeckung eines Dachs, insbesondere eines Flachdachs, umfassend: ein Profil, das auf der Dachabdeckung angeordnet ist; und wenigstens ein Systemdichtelement.

### STAND DER TECHNIK

Der Einsatz von Solarmodulen zur Stromerzeugung hat im Angesicht steigender Energiepreise und knapper werdender nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass die Solarmodule mit möglichst geringem technischem Aufwand an geeigneten Stellen aufgebaut und dort effektiv genutzt werden können. Bekanntermaßen werden Solarmodule häufig an Dächern angebracht, da dort die Sonneneinstrahlung ungehindert auf die Solarzelle auftreffen kann.

Insbesondere beim Anbringen von Solarmodulen auf Flachdächern führt dies jedoch zu Problemen, da Flachdächer meist durch besondere Maßnahmen, wie zum Beispiel dem Anbringen von wasserdichten Dachfolien, vor dem Eindringen von Feuchtigkeit geschützt sind. Beim Befestigen der Solarmodule kann der Feuchtigkeitsschutz leicht zerstört und das unerwünschte Eindringen von Wasser in die Dachstruktur gefördert werden.

Da dies nicht akzeptabel ist, werden beispielsweise beim Anschrauben von Haltevorrichtungen am Flachdach Dichtringe eingesetzt, die die Durchbrüche für die Schrauben am Flachdach abdichten sollen. Da jedoch in der Regel eine Vielzahl von Schraubverbindungen und entsprechenden Durchbrüchen vorgesehen ist, ist der Aufwand bei der Montage hoch. Bei unsauberem Arbeiten ist die Abdichtung unzureichend. Demnach ist die Montage stets aufwändig und teuer.

### AUFGABE DER ERFINDUNG

Ausgehend davon ist es die Aufgabe der vorliegenden Erfindung, ein Montagesysteme zur Montage von Solarmodulen an dem Flachdach bereit zu stellen, die eine Montage mit geringem Aufwand und hoher Zuverlässigkeit bei der Erhaltung der Funktionen des Dachs ermöglichen.

### TECHNISCHE LÖSUNG

Diese Aufgabe wird gelöst durch Bereitstellung eines Montagesystems nach Anspruch 1. Bevorzugte Ausführungsformen der Erfindung ergeben sich aus den Merkmalen der abhängigen Ansprüche.

Ein erfindungsgemäßes Montagesystem zur Montage von Solarmodulen auf der Dachabdeckung eines Dachs, insbesondere eines Flachdachs, umfassend: ein Profil, das auf der Dachabdeckung angeordnet ist; und wenigstens ein Systemdichtelement. Das Profil weist einen Mittelabschnitt und beidseitig sich vom Mittelabschnitt erstreckende Seitenflansche auf, wobei der Mittelabschnitt gegenüber den Seitenflanschen erhöht ausgebildet ist.

Das Montagesystem weist in der Regel mehrere Trägerelemente bzw. (Holz-)Bohlen bzw. Aluminiumprofile auf, die auf einer Abdeckfolie des Flachdachs liegen und beispielsweise mittels Schrauben am Flachdach befestigt werden. Das Profil ist ebenfalls auf der Dachabdeckung angeordnet und überspannt die Bohle bzw. das Profil. Unter Dachabdeckung kann jede wasserdichte Dachoberfläche verstanden werden, z.B. eine Dachfolie. Die Begriffe Dachabdeckung und Dachfolie werden im folgenden synonym verwendet. Folienendbereiche beidseitig des Profils angeordneter Folien sind beispielsweise über Verschweißungen/Schweißnähte oder durch Kleben mit seitlichen Flanschen des Profils wasserdicht verbunden.

Die Trägerelemente sind in der Regel als längliche, quaderförmige Planken bzw. Bohlen bereitgestellt. Die Bohlen werden abschnittsweise, vorzugsweise quer zum Profil, beispielsweise zu einem Trapez- oder Wellenprofil, des Flachdaches angebracht. Dies bedeutet, dass die Bohlen vorzugsweise entlang eines Vorsprunges, oder auch entlang einer Vertiefung im Flachdachprofil befestigt werden. Insbesondere bezieht sich die vorliegende Erfindung auf das Anbringen von Solarmodulen auf Flachdächern mit einer Dachfolie. Die Solarmodule werden vorzugsweise oberhalb der Dachfolie angebracht. Unter der Dachfolie befindet sich weiches Material, z.B. Dämmstoffmaterial. Daher muss die Last der Bohle verteilt werden. Dies bedeutet, dass sich die Bohle mindestens über zwei, insbesondere über eine Vielzahl von Vorsprüngen des trapezförmigen Dachs erstrecken muss. Einzelne punktförmige Befestigungen sind dagegen für die Montage von Solarmodulen weniger gut geeignet, da Schub- uns Zugkräfte, besonders letztere, die auf eine Montageeinrichtung für Solarmodule wirken, die oberhalb einer Dachfolie, evtl. mit einem weichen Untergrund, angebracht ist, gut über die Länge einer Bohle verteilt werden müssen.

Um für den Einsatz auf einem Trapezblech geeignet zu sein, müssen die Bohlen durchgängig ausgebildet sein und eine relativ große Auflagefläche bilden. Bei punktförmigen Auflagen kann die unter der Dachfolie liegende Isolierung zerbrechen.

Außerdem ergibt sich bei langen, durchgehend angeordneten Bohlen der Vorteil, dass Systemdichtelemente lediglich linienförmig verschweißt werden müssen. Dies erlaubt den Einsatz von Schweißrobotern.

Das Trägerelement ist beispielsweise auf die Oberfläche einer Dachfolie an das Flachdach aufgeschraubt. Statt Holzbohlen können auch Trägerelemente aus anderen Materialien, z.B. Profilschienen, beispielsweise aus Aluminium, mit beliebigem Querschnitt verwendet werden. Durch das Trägerelement und dessen Befestigung werden eine linienförmige Lastverteilung und ein stabiles Anbringen der Solarmodule gewährleistet. Außer dem Systemdichtelement können auch Befestigungsmittel, z.B. Schrauben, bereits vor der Montage am Dach am Trägerelement angeordnet sein.

Das Systemdichtelement im Sinne der Erfindung ist ein flächiges Element, das einen Träger wenigstens teilweise umhüllen kann und ein Durchdringen von Feuchtigkeit zur Dachstruktur hin verhindert. So kann eine Folie aus Kunststoff vorgesehen sein. Das Systemdichtelement kann jedoch auch aus Textilmaterialien, Matten, bituminösen Bahnen, mit Metall beschichteten Werkstoffen, o.ä., bestehen, soweit diese das Eindringen von Wasser in den Spalt zwischen dem Trägerelement bzw. Profil und der Dachfolie wasserdicht abdichten können und an einer Dachabdeckung (z.B. einer Dachfolie) befestigtbar sind. Das Systemdichtelement kann an der Dachfolie befestigt und am Profil wenigstens abschnittsweise über die seitlichen Flansche geführt sein, insbesondere beidseitig der Bohle. So bildet das Systemdichtelement eine gegen das Eindringen von Feuchtigkeit. Das Verschweißen kann manuell, vorzugsweise aber auch maschinell erfolgen, da lediglich geradlinige, sich über eine relativ große Länge erstreckende Schweißnähte gebildet werden müssen.

Mit Hilfe der Erfindung kann ohne großen Aufwand ein wasserdichtes System, bestehend aus der Dachfolie und der wasserdichten Folie sowie dem Profil, bereitgestellt werden. Das Systemdichtelement kann mit der Dachfolie verschweißt sein. Gegenüber dem Anbringen von Dichtungen an einzelnen Verbindungsschrauben verhindert das System nicht nur zuverlässig das Eindringen von Wasser in die Dachstruktur, sondern erleichtert auch die Montage erheblich. Beispielsweise ist kein aufwändiges Öffnen des Dachs, Verankern der Modulunterkonstruktion, etc. nötig. Dies führt zu Zeit- und Kostenersparnissen bei der Montage. Das Montagesystem ist damit auch für das Solarmodule mit geringerem Flächennutzungsgrad (nicht- kristalline Module) vorteilhaft.

Die Handhabung des Systems ist, bei geringer Belastung für das Dach, insgesamt einfach. Insbesondere im Zusammenspiel mit dem Einsatz von Dünnfilm-Modulen kann eine Bauweise mit wenig Gewicht realisiert werden, die insbesondere auch für Leichtdächer gut geeignet ist.

Eine Demontage des Systems ist, da die Dachfolie in der Regel nicht oder nur an wenigen Stellen beschädigt wird, ohne erheblichen Aufwand möglich. Beispielsweise kann eine Schweißverbindung zwischen der Dachfolie und dem Systemdichtelement leicht gelöst werden.

Die Profile können vorgefertigt mit einer seitlich an den Flanschen angebrachten Folie bereitgestellt werden. Nach dem Anordnen des Profils auf der Dachfolie kann die Folie mit der Dachfolie wasserdicht verschweißt werden.

Vorzugsweise ist das Systemdichtelement als wasserdichte Folie ausgebildet.

Insbesondere weist das Systemdichtelement ein freies Ende auf, das über wenigstens einen der Seitenflansche des Profils geführt ist, d.h. das freie Ende liegt auf dem Flansch auf. Das Systemdichtelement kann ein freies Ende und einen Endbereich aufweisen, der mit wenigstens einem der Seitenflansche überlappend angeordnet ist. Das Systemdichtelement kann auf wenigstens einem der Seitenflansche aufliegen, d.h. oberhalb des Flansches angeordnet sein.

Das Montagesystem weist vorzugsweise zwei Systemdichtelemente mit jeweils einem freien Ende und einem Endbereich auf, wobei der Endbereich jeweils eines der Systemdichtelemente mit jeweils einem der Seitenflansche überlappend angeordnet und jeweils auf einen Seitenflansch geführt ist. Der Endbereich wenigstens eines der Systemdichtelemente kann an wenigstens einem der Seitenflansche und/oder dem Mittelabschnitt befestigt, insbesondere mit diesem verschweißt sein.

Der Mittelabschnitt bildet vorzugsweise einen Aufnahmeraum für ein Trägerelement. Der Mittelabschnitt kann U-förmig ausgebildet sein. Er kann in Form eines umgekehrten U's auf der Dachfolie angeordnet sein.

Insbesondere weist das Montagesystem wenigstens ein Trägerelement auf, das auf der Dachabdeckung angeordnet ist und vom Profil wenigstens teilweise umschlossen wird. Das Trägerelement kann auf der Dachfolie aufliegen. Als besonders vorteilhaft hat es sich erwiesen, ein Trägerelement aus Holz zu verwenden, da bei der Bearbeitung und Montage von Holzelementen, im Gegensatz zu Metallbauteilen, keine Späne entstehen können, die die Dachabdichtung, insbesondere eine Dachfolie, beschädigen können. Das Trägerelement kann auf der Dachfolie und im Aufnahmeraum des Mittelabschnitts angeordnet sein.

Vorzugsweise weist das Montagesystem wenigstens ein Befestigungsmittel zum Befestigen des Profils und/oder des Trägerelements am Dach auf.

Das Profil weist vorzugsweise wenigstens eine Öffnung zum Durchführen eines Befestigungsmittels auf. Das Montagesystem kann vorzugsweise Befestigungsmittel zur Befestigung des Trägerelements am Flachdach umfassen. Die Befestigungsmittel sind vorzugsweise zur Befestigung an der Unterkonstruktion des Dachs ausgebildet. Dadurch wird eine ausreichende Stabilität gewährleistet. Außerdem werden die statischen Anforderungen an die gesamte Konstruktion erfüllt. Die Befestigungsmittel weisen insbesondere wenigstens einen sich vom Trägerelement erstreckenden Schaft zum Durchgriff durch das Dach zur Unterkonstruktion des Dachs auf. Als Befestigungselemente werden in der Regel Schrauben, Bolzen, Stifte, o.ä., verwendet. Der Schaft der Schraube ragt durch eine Öffnung im Dach hindurch und wird an der Unterkonstruktion fixiert.

Vorzugsweise ist die wenigstens eine Öffnung im Mittelabschnitt und/oder in den Seitenflanschen angeordnet.

Der Endbereich wenigstens eines der Systemdichtelemente kann wenigstens eine der Öffnungen des Profils und/oder wenigstens ein Befestigungsmittel überdecken.

Die Seitenflansche erstrecken sich insbesondere seitlich und/oder im Wesentlich waagerecht. Die Seitenflansche liegen vorzugsweise auf der Dachfolie auf. Der Mittelabschnitt ist insbesondere in Form eines umgekehrten U's auf der Dachfolie angeordnet.

Die Seitenflansche können sich beidseitig von den freien Enden der Schenkel des U-förmigen Mittelabschnitts des Profils erstrecken.

Das Profil kann mit der Dachfolie verbunden sein, insbesondere verklebt oder verschweißt sein. Wenigstens einer der Seitenflansche des Profils kann mit der Dachfolie verbunden sein, insbesondere verklebt oder verschweißt sein.

Das Montagesystem umfasst vorzugsweise wenigstens ein Verbindungselement zur Verbindung des Solarmoduls mit dem Trägerelement. Das Verbindungselement ist insbesondere an einer von der Dachfolie abgewandten Seite des Trägerelements bzw. des Profils angeordnet. Das Verbindungselement kann mittels wenigstens eines Befestigungselements mit dem Trägerelement bzw. dem Profil verbunden sein. Als Befestigungselemente können Schrauben, Bolzen, Stifte, o.ä., verwendet werden.

Das Verbindungselement kann aus einem oder mehreren Teilen bestehen, die das Solarmodul bezüglich des Trägerelements fixieren. Das Verbindungselement kann wenigstens ein Haltemittel und/oder eine Modulschiene und/oder eine Anständerung und/oder eine Montageschiene zur Befestigung des Solarmoduls aufweisen. Beispielsweise kann das Haltemittel als Befestigungswinkel oder als Profil zum formschlüssigen Anklammern an das Trägerelement ausgebildet sein. Sofern eine Montageschiene verwendet wird, kann diese quer oder längs an den Trägerelementen angebracht werden, anschließend können Modulschienen quer oder längs an den Montageschienen angebracht werden.

Die Dachabdeckung/Dachfolie und das Systemdichtelement können beidseitig des Trägerelements durch jeweils wenigstens eine Verbindungsnaht verbunden sein, um beidseitig ein Eindringen von Feuchtigkeit in den Bereich der Durchgangsöffnung der Befestigungsmittel zu verhindern. Die Verbindungsnaht bzw. die Verbindungsnähte zwischen dem Systemdichtelement und der Dachfolie des Flachdachs sind insbesondere wasserdicht ausgebildet.

In einer Kombination aus einem Montagesystem wie oben beschrieben mit einem Dach, insbesondere mit einem Flachdach, ist das Trägerelement mit dem Flachdach verbunden .

Besonders geeignet ist die Erfindung für die Montage von Solarmodulen auf Flachdächern. Flachdächer, beispielsweise mit Trapez- oder Wellenprofil, aber auch Dächer mit ebener Oberfläche, weisen in der Regel ein Abdichtsystem auf, um das Eindringen von Feuchtigkeit in die Dachstruktur zu verhindern. Zu diesem Zweck ist eine Dachabdeckung, beispielsweise eine Dachfolie, vorgesehen, die jedoch bei herkömmlicher Montage der Module leicht beschädigt werden kann. Außerdem kann unter der Dachfolie des Flachdachs eine Isolierung vorgesehen sein, so dass der Montageort relativ weich und instabil ist.

Vorzugsweise ist bzw. sind das Trägerelement bzw. die Trägerelemente quer, insbesondere senkrecht, zum Profilverlauf des Flachdaches angeordnet.

Die Kombination weist insbesondere eine Dachunterkonstruktion auf, mit der das Trägerelement verbunden ist.

Das Trägerelement kann mit der Dachunterkonstruktion über sich durch das Dach erstreckende Befestigungsmittel verbunden sein. Im Gegensatz zur Befestigung des Trägerelements an der Oberfläche des Flachdachs, z.B. durch Ankleben, wird so eine für die Statik ausreichende Stabilität erreicht.

Die Befestigungsmittel sind vorzugsweise kraftschlüssig mit dem Dach, insbesondere mit der Unterkonstruktion des Dachs, verbunden. Dadurch kann eine ausreichende statische Stabilität der Verbindung nachgewiesen werden.

Mit Hilfe des Systems sind das Dach bzw. die Dachfolie direkter UV-Strahlung weniger ausgesetzt, wodurch sich die Lebensdauer des Dachs erhöhen kann. Außerdem bieten die montierten Module bei hoher Sonneneinstrahlung Schutz vor zu hoher Wärmebelastung des Gebäudes. Die Dachfolie selbst ist, insbesondere bei der kraftschlüssigen Befestigung des Montagesystems an der Unterkonstruktion des Dachs statt an der Dachfolie, besser vor Windsogkräften und mechanischer Belastung geschützt.

Ein weiteres Montagesystem zur Montage von Solarmodulen auf der Dachfolie eines Dachs, insbesondere eines Flachdachs, umfasst: ein Profil, das auf der Dachfolie angeordnet ist; und Befestigungsmittel zur Befestigung des Profils am Dach. Das Profil weist einen Mittelabschnitt und beidseitig sich vom Mittelabschnitt erstreckende Seitenflansche auf, wobei der Mittelabschnitt gegenüber den Seitenflanschen erhöht ausgebildet ist. Diese Ausführungsform ist ohne Systemdichtelement vorgesehen, das sich über die Seitenflansche erstreckt.

Neben dem Profil kann das Montagesystem ein zusätzliches Abdeckprofil aufweisen, das oberhalb des Profils angeordnet ist. Das Abdeckprofil kann einen Mittelabschnitt mit einem einen Aufnahmeraum zur Aufnahme des Mittelabschnitts des Profils aufweisen. Das Abdeckprofil weist vorzugsweise beidseitig sich vom Mittelabschnitt erstreckende Seitenflansche auf, wobei der Mittelabschnitt des Abdeckprofils gegenüber den Seitenflanschen des Abdeckprofils erhöht ausgebildet ist. Der Mittelabschnitt des Abdeckprofils kann U-förmig ausgebildet sein. Der Mittelabschnitt des Abdeckprofils ist vorzugsweise in Form eines umgekehrten U's über das Profil gestülpt. In einer bevorzugten Ausführungsform der Erfindung wirkt wenigstens einer der Seitenflansche des Abdeckprofils mit wenigstens einem der Seitenflansche des Profils zusammen, um den Endbereich eines Systemdichtelements mittels einer Klemmverbindung festzuhalten. Das Abdeckprofil kann wenigstens eine Öffnung zum Durchgriff eines Befestigungsmittels zur Befestigung des Abdeckprofils am Profil aufweisen.

### KURZE BESCHREIBUNG DER FIGUREN

Weitere Merkmale und Vorteile der Erfindung werden aus der nachfolgenden Beschreibung bevorzugter Ausführungsbeispiele an Hand der Figuren deutlich. Es zeigen:
- Figuren 1a - 1d: Verfahrensschritte zur Montage eines Solarmoduls an einem Trapezdach in einer ersten Ausführungsform der Erfindung;
- Figur 2: eine Schnittansicht der ersten Ausführungsform des montierten Montagesystems;
- Figur 3: eine perspektivische Ansicht der ersten Ausführungsform des montierten Montagesystems;
- Figur 4: eine weitere perspektivische Ansicht der ersten Ausführungsform des montierten Montagesystems;
- Figur 5: eine Ansicht einer zweiten Ausführungsform der Erfindung;
- Figur 6a: eine Ansicht einer dritten Ausführungsform der Erfindung ohne Modulschiene;
- Figur 6b: eine Ansicht der dritten Ausführungsform der Erfindung mit Modulschiene;
- Figur 7: eine Schnittansicht einer vierten Ausführungsform der Erfindung;
- Figuren 8a - 8d: Verfahrensschritte zur Montage eines Solarmoduls an einem Trapezdach in einer fünften Ausführungsform der Erfindung;
- Figuren 9a - 9c: Verfahrensschritte zur Montage eines Solarmoduls an einem Trapezdach in einer sechsten Ausführungsform der Erfindung;
- Figur 10: eine Ansicht einer siebten Ausführungsform der Erfindung;
- Figuren 11a, 11b: ein erstes Konzept einer erfindungsgemäßen Dachsanierung;
- Figuren 12a -12c: ein zweites Konzept einer erfindungsgemäßen Dachsanierung;
- Figur 13: ein drittes Konzept einer erfindungsgemäßen Dachsanierung;
- Figur 14: ein viertes Konzept einer erfindungsgemäßen Dachsanierung;
- Figur 15: ein erstes erfindungsgemäßes Klemmprofil;
- Figur 16: ein zweites erfindungsgemäßes Klemmprofil;
- Figur 17a, 17b: ein erstes erfindungsgemäßes Halteprofil;
- Figur 18: ein zweites erfindungsgemäßes Halteprofil;
- Figur 19: ein drittes erfindungsgemäßes Halteprofil; und
- Figur 20: ein viertes erfindungsgemäßes Halteprofil.

### BESCHREIBUNG BEVORZUGTER AUSFÜHRUNGSBEISPIELE

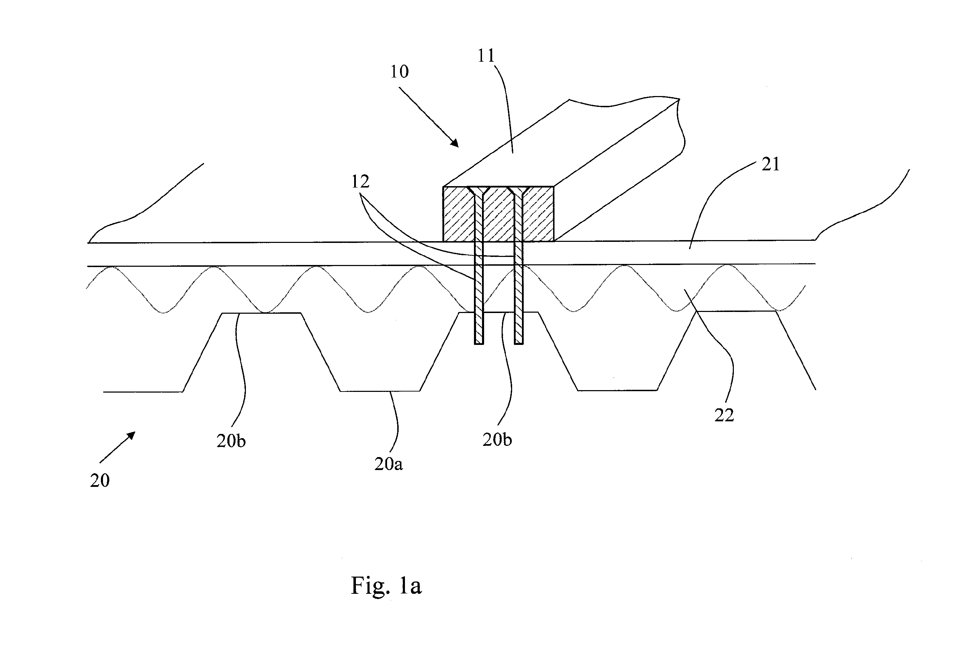

Die Figuren 1a bis 1d zeigen Komponenten eines erfindungsgemäßen Montagesystems 10, wie sie in aufeinander folgenden Verfahrenschritten auf ein Flachdach 20 montiert werden.

Das Flachdach 20 weist eine trapezartige Struktur mit sich in Richtung L längs erstreckenden trapezförmigen Vertiefungen 20a und benachbarten, sich in Richtung L längs erstreckenden trapezförmigen Vorsprüngen 20b auf. Die Vertiefungen 20a und die Vorsprünge 20b verlaufen in einer Längsrichtung L parallel zueinander. Auf dem Flachdach 20 ist eine Abdeckfolie 21 angeordnet. Unter der Abdeckfolie 21 kann wahlweise weiches Dämmmaterial 22 (Styropor, Glaswolle, etc.) angeordnet sein.

Das Montagesystem 10 weist mehrere Bohlen 11 auf, die auf der Abdeckfolie 21 liegen und beispielsweise mittels Schrauben 12 am Flachdach 20 befestigt werden. Die Schrauben 12 ragen durch die Dachfolie 21 und die Dämmung 22 hindurch, um an einem Vorsprung 20b bzw. dem Unterbau des Flachdachs befestigt zu werden.

Die Bohlen 11 sind in der Längsrichtung L am Flachdach 20 ausgerichtet. Die Bohlen 11 werden in bestimmten Abständen parallel zueinander am Flachdach 20 befestigt. Die Bohlen 11 sind so konzipiert, dass sie Druck- und Soglasten, die im Zusammenhang mit Solarmodulen auftreten können, auf das Flachdach verteilen können. Dazu weisen die Bohlen eine bestimmte Höhe und Breite von wenigstens mehreren Zentimetern und eine Länge auf, die viel größer als deren Höhe und Breite ist. So kann die Last auf eine Vielzahl von Befestigungen am Flachdach, bzw. auf eine große Länge des Flachdachs verteilt werden. Die beschriebenen Vorrichtungen und Verfahren sind daher für weiche Foliendächer und Leichtbaudächer geeignet.

Wird eine Bohle quer oder senkrecht zur Längsrichtung L angebracht, so kann die Bohle an mehreren Erhöhungen des Trapezdachs befestigt werden. Die Last wird so verteilt, dass die eventuell unter der Dachfolie 21 liegende Isolierung 22 keinen Schaden nimmt.

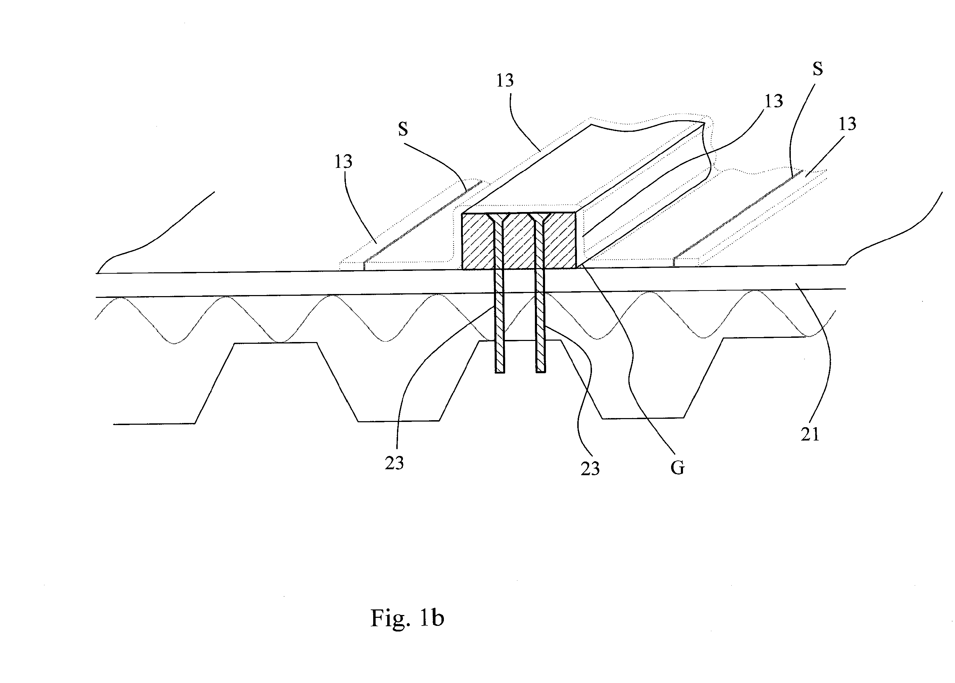

Die Bohle 11 wird im Verfahrensschritt gemäß Figur 1b mittels einer Folie 13 eingeschweißt, wobei die Folie 13 mittels wenigstens einer Schweißnaht S pro Seite an die Dachfolie 21 angeschweißt wird, so dass die Bohle 11 vollständig von den Folien 21 und 13 umschlossen wird. Auf diese Weise sind die Befestigungsschrauben 12 vollständig von den Folien 11 bzw. 13 umschlossen, so dass ein Eindringen von Feuchtigkeit durch die Dachfolie 21 zum Flachdach 20 hin verhindert wird. Insbesondere wird ein Eindringen von Feuchtigkeit in den Spalt G zwischen der Bohle 11 und der Dachfolie 21 verhindert, so dass die Feuchtigkeit nicht bis zu den Öffnungen 23 in der Dachfolie 21 vordringen und von dort in den Bereich unter die Dachfolie 21 gelangen kann.

Neben oder zwischen den eingeschweißten Bohlen können (nicht dargestellt) auch Bohlen angeordnet werden, die nicht mit dem Dach verschraubt und lediglich durch Ballast, der auf die Folie gebracht wird, in ihrer Position gehalten werden. Als Ballast können z.B. Kies oder Platten auf die Folie aufgebracht werden.

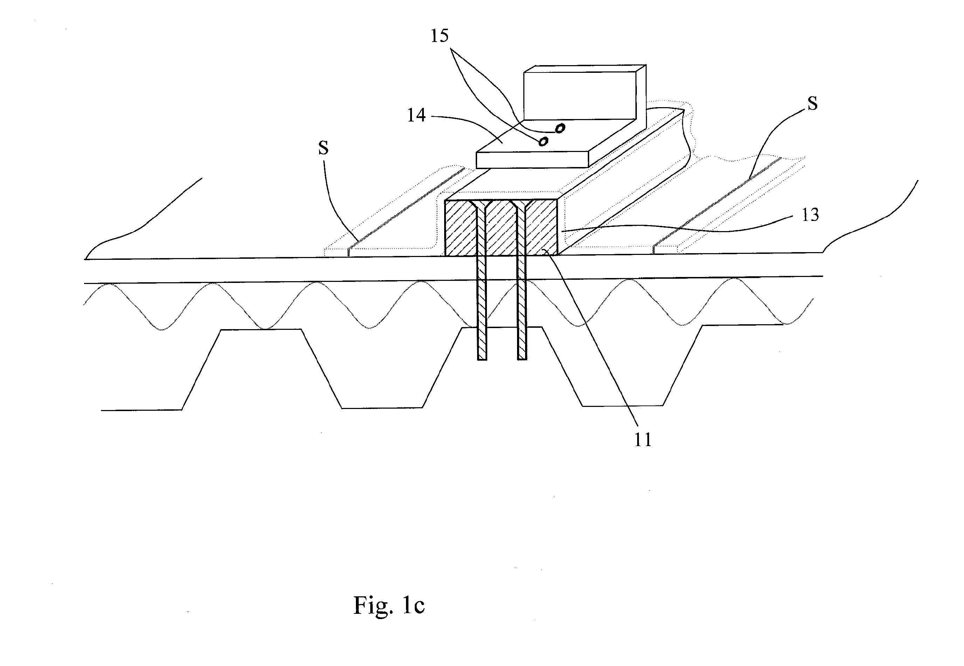

In einem weiteren Verfahrensschritt gemäß der Figur 1c wird ein Haltewinkel 14 beispielsweise aus Aluminium, an der zuvor eingeschweißten Bohle 11 befestigt. Die Befestigung erfolgt beispielsweise durch Schrauben 15.

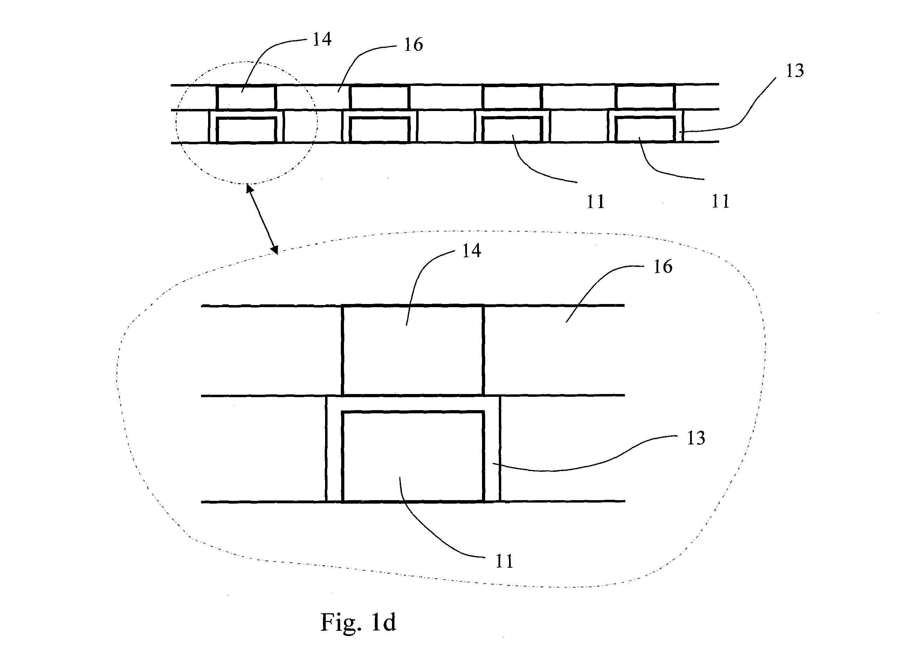

In der Figur 1d ist ein größerer Abschnitt mit mehreren Bohlen 11 und daran befestigten Haltewinkeln 14 dargestellt. An den Haltewinkeln 14 sind dabei Modulschienen 16, beispielsweise aus Aluminium, quer zu den Bohlen 11 befestigt. In dem letzten Montageschritt (nicht dargestellt) erfolgt die Befestigung der Solarmodule an den Modulschienen 16, d.h. zwischen jeweils zwei parallel angeordneten Modulschienen 16.

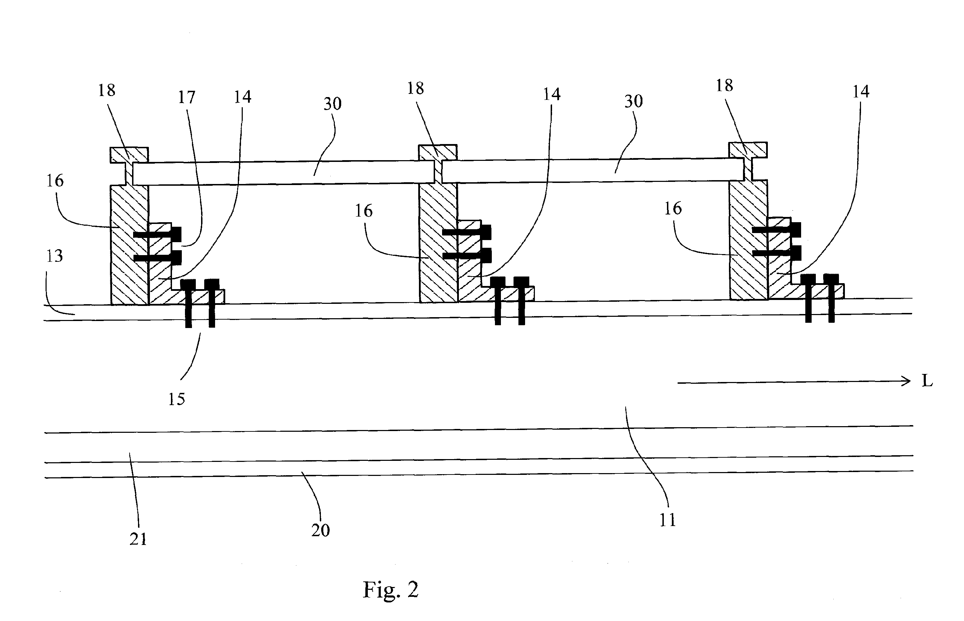

Eine Ausführungsform mit montierten Solarmodulen 30 ist in einer Schnittansicht gemäß der Figur 2 gezeigt. Auf dem Flachdach 20 ist eine Abdeckfolie 21 angeordnet. Auf der Abdeckfolie 21 liegt eine Bohle 11 auf, die beispielsweise mittels Schrauben (nicht dargestellt) am Flachdach 20 befestigt ist. Die Bohle 11 ist zudem in eine wasser- oder feuchtigkeitsdichte Folie 13 und die Dachfolie 21 (oberhalb der Dachfolie) eingeschweißt, so dass sie vollständig von den Folien 21 und 13 umschlossen wird.

An der Oberseite der Bohlen 11 sind parallel beabstandete Haltewinkel 14, beispielsweise mittels Schrauben 15, befestigt. Die Haltewinkel 14 selbst tragen beispielsweise über eine weitere Schraubverbindung 17 befestigte, parallel zueinander angeordnete und senkrecht zur Längsrichtung L angeordnete Modulschienen 16.

An den Modulschienen 16 sind, beispielsweise mittels Klemmverbindungen 18, Solarmodule 30 befestigt.

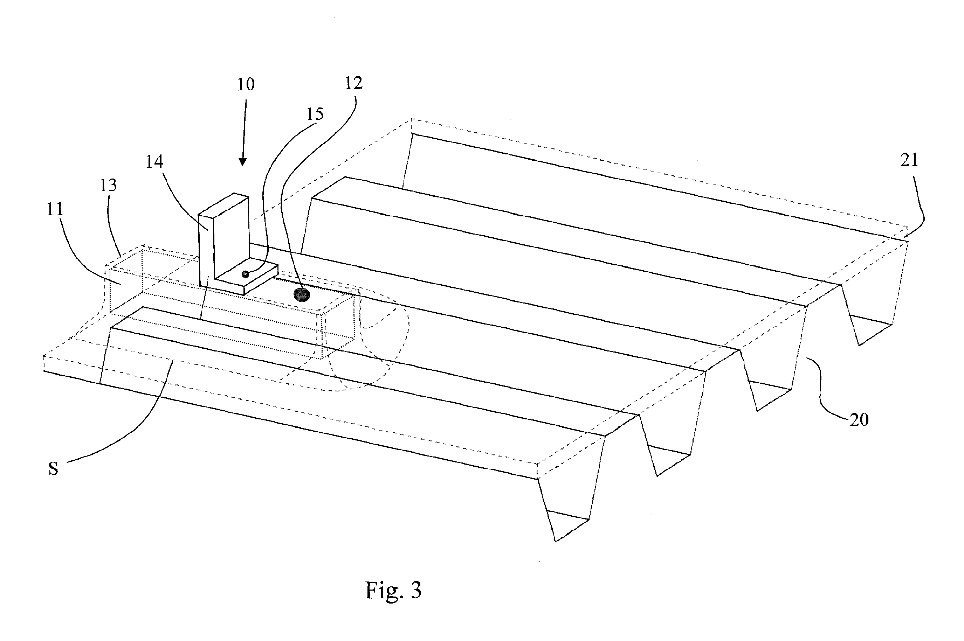

Eine perspektivische Ansicht des Aufbaus aus der Figur 2 ist in der Figur 3 dargestellt. Die Bezugszeichen stellen gleiche Komponenten dar wie im Zusammenhang mit den vorherigen Figuren beschrieben.

Demnach ist an der Oberfläche des Trapezdachs 20 eine Dachfolie 21 angeordnet. Die Bohlen 11 sind auf der Dachfolie 21 angeordnet und von einer Folie 13 sowie einem Teil der Dachfolie 21 umschlossen. Die Folie 13 ist mit der Dachfolie 21 beidseitig über jeweils eine Schweißnaht S verschweißt. Auf diese Weise ist das Dach 20 vor dem Eindringen von Flüssigkeit, insbesondere auch in den Bereich der Öffnung in der Dachfolie 21, durch die die Schrauben 12 hindurch ragen, geschützt. Auf der Oberfläche der der Bohle 11 abgewandten Seite der Folie 13 ist mittels weiterer Schrauben 15 ein Befestigungswinkel 14 befestigt.

Der Befestigungswinkel 14 dient allgemein als Verbindungselement zum Anbringen, beispielsweise einer Modulschiene, an der das Solarmodul befestigt wird, oder anderer Mittel zur Befestigung des Solarmoduls. Der Befestigungswinkel 14 kann dabei in beliebiger Weise als Verbindungselement zwischen der Bohle 11 und den am Verbindungselement 14 unmittelbar oder mittelbar angebrachten Solarmodulen 30 ausgebildet sein.

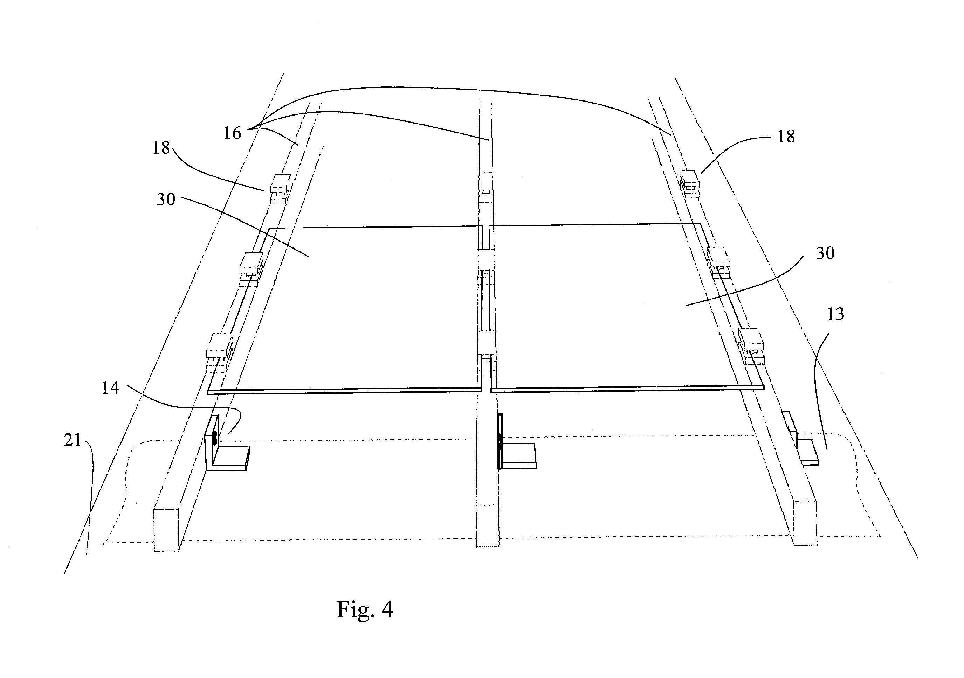

Die Figur 4 zeigt eine weitere Perspektive von mit Hilfe des erfindungsgemäßen Montagesystems montierten Solarmodulen 30. Die Module 30 sind jeweils zwischen zwei Modulschienen 16 montiert. Eine Bohle wie vorher beschrieben ist quer zu den Modulschienen 16 ausgerichtet und von einer Abdeckfolie 13 abgedeckt, die an allen Seiten mit der Dachfolie 21 verschweißt ist.

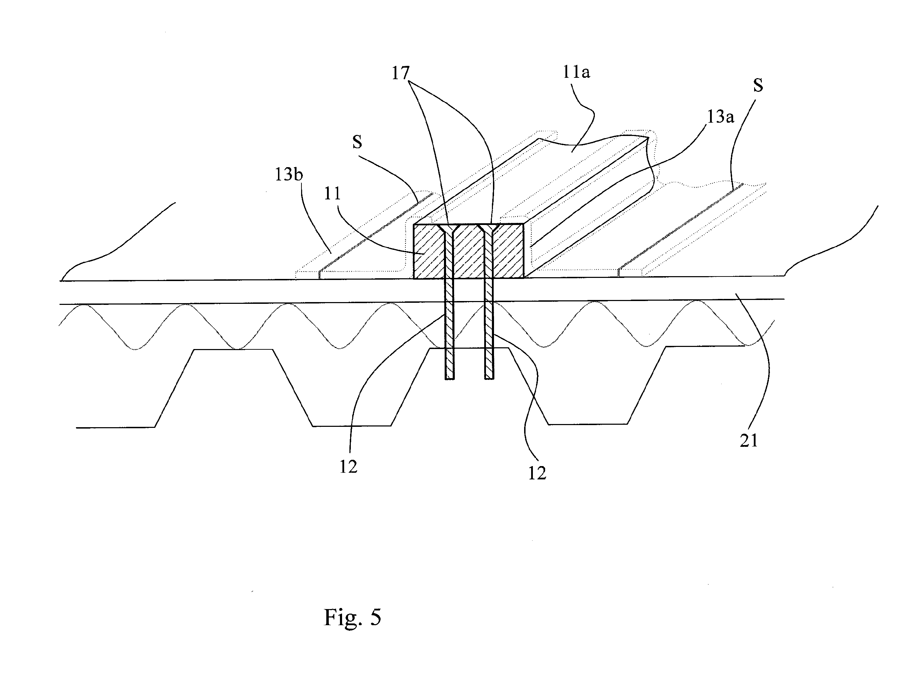

Die Figur 5 zeigt eine weitere Ausführungsform der Erfindung. Im Unterschied zur bisher beschriebenen Ausführungsform besteht die Abdeckfolie aus zwei Teilen 13a und 13b. Der erste Teil 13a der Folie ist auf der ersten Seite der Bohle 11 angeordnet und erstreckt sich von der Oberseite 11a der Bohle 11 seitlich nach unten bis zur Dachfolie 21. Dort ist sie mittels einer Schweißnaht S verschweißt. Der zweite Teil 13b der Folie 13 erstreckt sich in ähnlicher Weise von der gegenüberliegenden Seite der Oberfläche 11a der Bohle 11 nach unten bis zur Dachfolie 21 und ist dort mit einer Schweißnaht S mit der Dachfolie 21 verschweißt.

Die Folienenden der Folienteile 13a und 13b sind an der Oberseite 11a der Bohle 11 ebenfalls befestigt, beispielsweise verschweißt, verklebt, o. ä. Bei dieser Ausführungsform sind die Zugangsöffnungen 17 für die Befestigungsschrauben 12 auch nach dem Verschweißen frei zugänglich. Auf diese Weise ist es möglich, auch nach dem Einschweißen der Bohle 11 diese zu befestigen oder die Befestigungsschrauben 12 zu lösen.

Die Öffnungen 17 in der Bohle 11 können wahlweise abgedeckt werden, beispielsweise mittels eines Abdeckprofils. Sie können jedoch auch durch Verkleben, o. ä. abgedichtet werden.

Diese Ausführungsform ist es besonders dazu geeignet, vormontierte Montagekomponenten, bestehend wenigstens aus der Bohle 11 und den an der Oberfläche 11a der Bohle 11 befestigten Abdeckfolien 13a und 13b bereitzustellen. Das vormontierte Bauteil kann in diesem Zustand ohne weiteres am Dach ausgerichtet und mittels der Befestigungsschrauben 12 montiert werden. Vor oder nach der Befestigung können die Folienteile 13a, 13b an der jeweiligen Seite der Bohle 11 verschweißt werden.

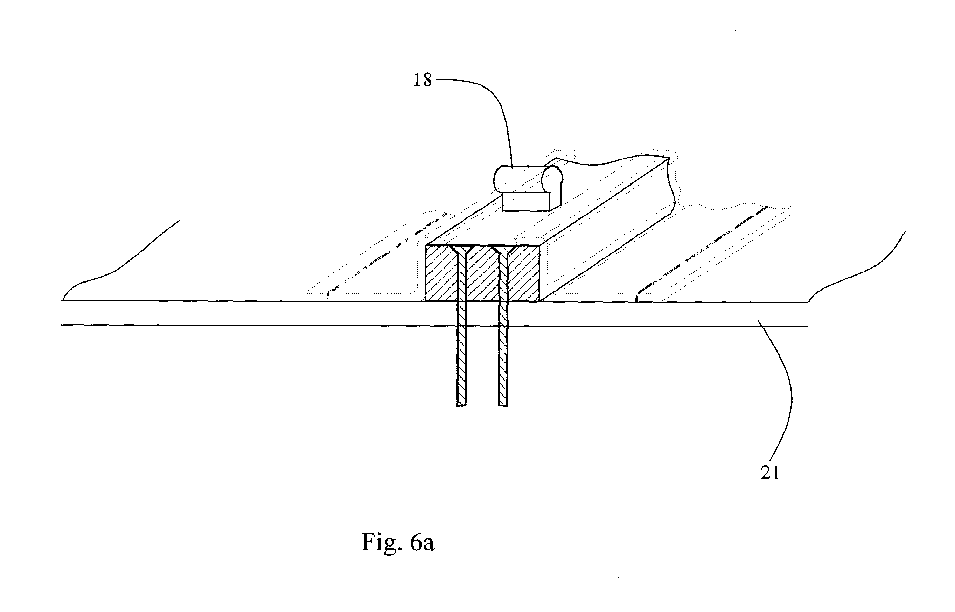

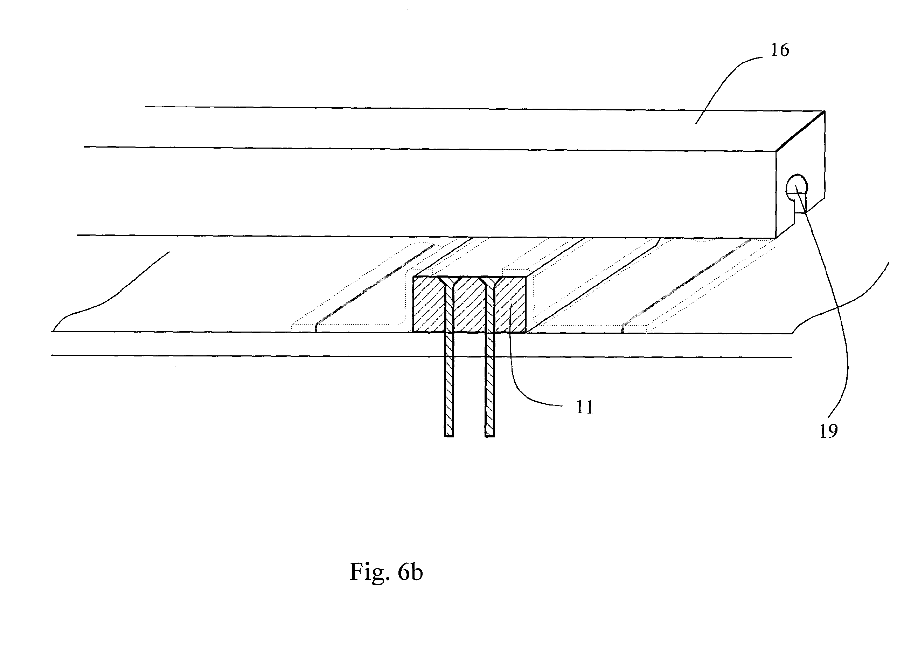

Zudem kann an der Bohle 11 ein Verbindungselement, beispielsweise einen Haltewinkel 14 oder ein Profil 18, angebracht sein, das mit einem an den Modulschienen 16 ausgebildeten Gegenprofil 19 zusammenwirken kann, um die Modulschiene 16 in einfacher Weise zu befestigen. Die Figur 6a zeigt schematisch ein derartiges Profil 18. In der Figur 6b ist eine Modulschiene 16 mit einem entsprechenden Gegenprofil 19 auf die Bohle 11 aufgeclipst. Auf diese Weise ist eine besonders einfache Montage der Solarmodulanlage auf einem Flachdach möglich.

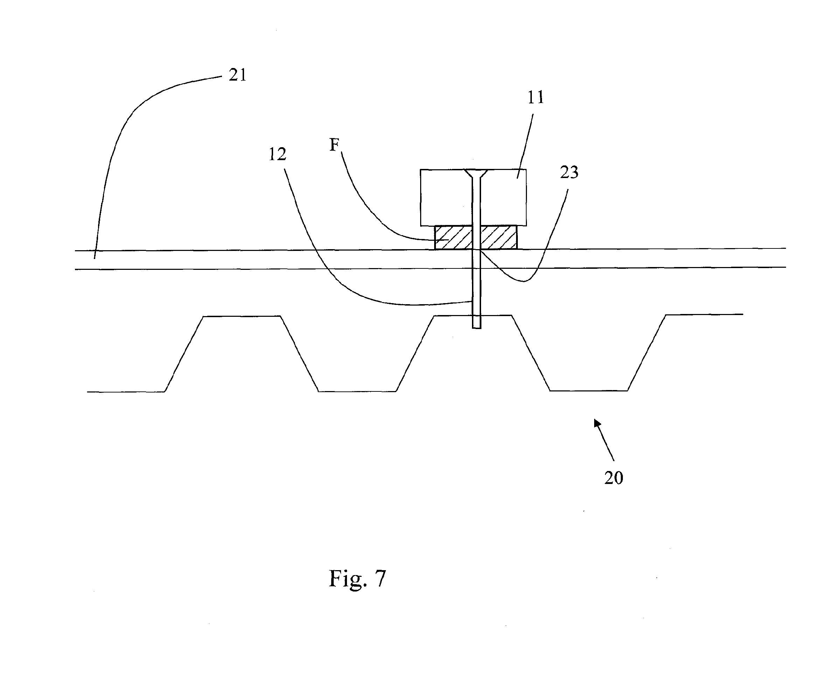

Die Figur 7 zeigt eine weitere Ausführungsform der Erfindung in einer Schnittansicht senkrecht zur Längsachse L des Trapezdaches 20. In diesem Ausführungsbeispiel wird die Bohle 11 über eine flächige, wasserdichte Verbindung F mit der Dachfolie 21 verbunden. Die flächige Verbindung F, beispielsweise eine Klebeverbindung, hindert Feuchtigkeit, die sich auf der Dachfolie 21 befindet, daran, in die Durchgangsöffnung 23 einzudringen, durch die die Befestigungsschraube 12 geführt ist.

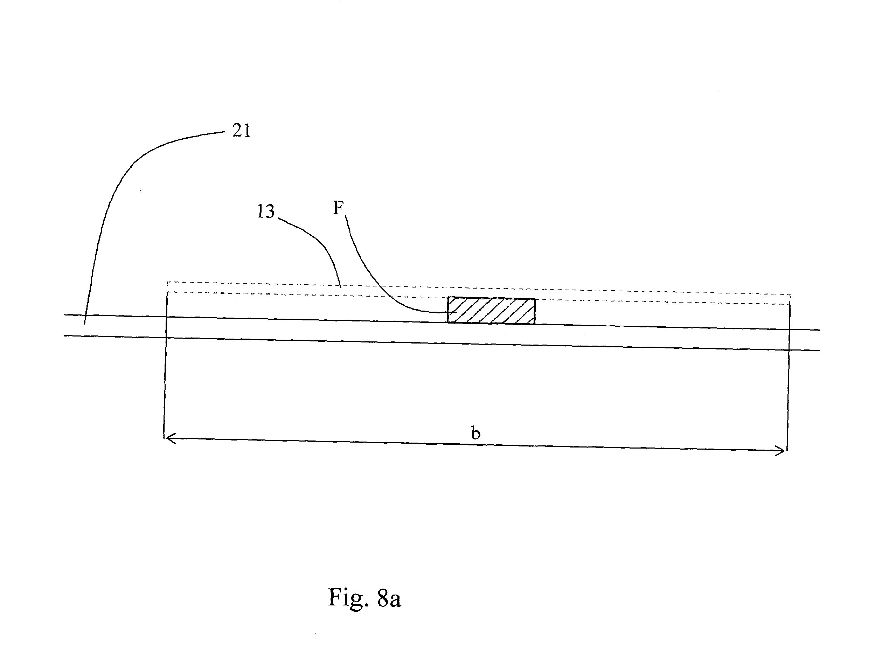

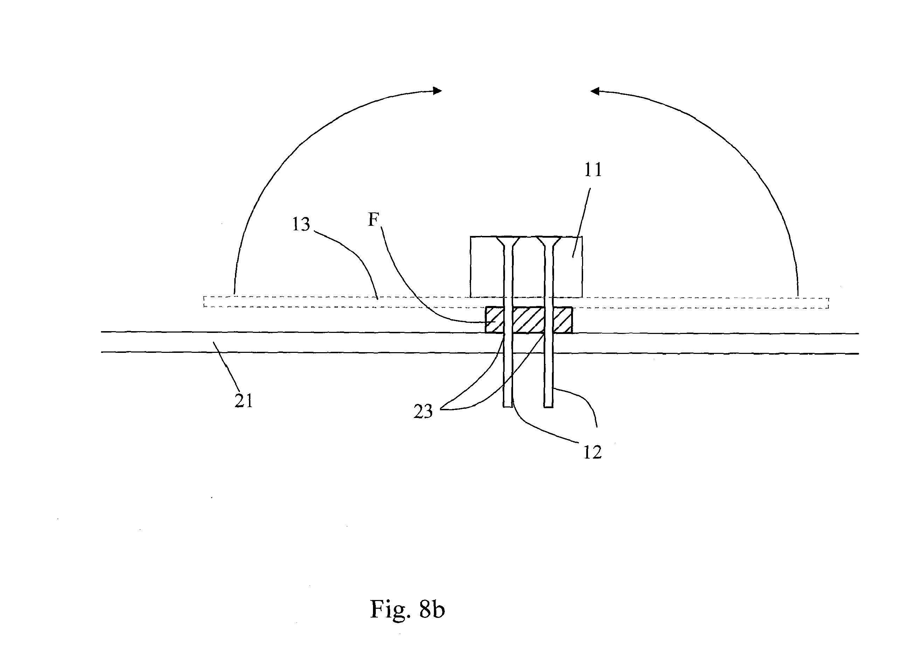

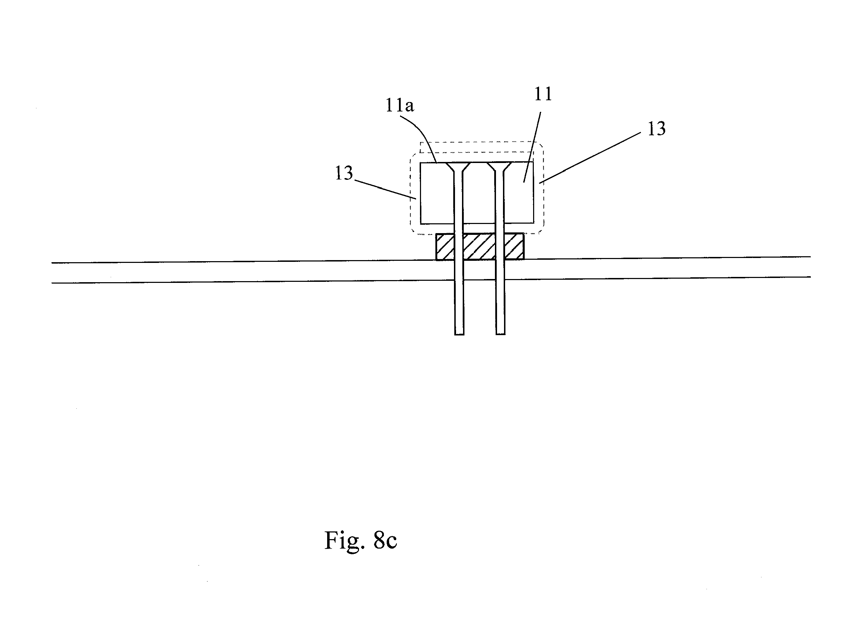

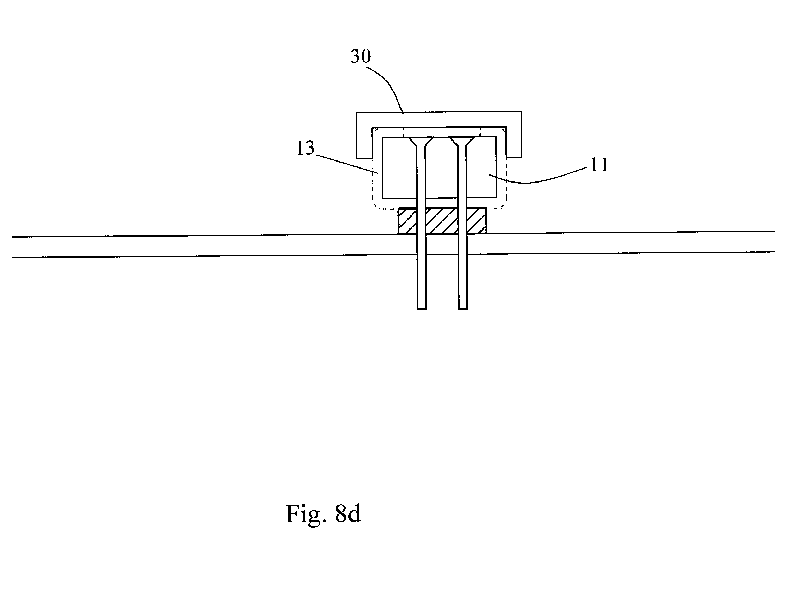

In der Figur 8a ist ein erster Schritt in der Montage eines fünften Ausführungsbeispiels der vorliegenden Erfindung dargestellt. Zunächst wird eine Folie 13 mit einer Breite b bereitgestellt und über eine flächige Verbindung F an der Dachfolie 21 eines Trapezdachs 20 befestigt.

In einem weiteren Verfahrensschritt 8b wird eine Bohle 11 im Bereich der flächigen Verbindung F auf die Folie gelegt und ausgerichtet. Die Bohle 11 wird anschließend mittels Befestigungsschrauben 12, die durch die flächige Verbindung F hindurchragen, an der Dachunterkonstruktion befestigt. Die flächige Verbindung F hindert Feuchtigkeit daran, in die Öffnungen 23 einzudringen.

In einem weiteren Verfahrensschritt 8c wird die Folie 13 beidseitig über die Oberseite 11a der Bohle 11 übergeschlagen und an deren Oberseite 11a befestigt. Die Bohle 11 wird somit von der Folie 13 umschlossen.

Die Folie 13 kann auf der Oberseite 11a in beliebiger Weise befestigt werden, beispielsweise durch Verschweißen der beiden Enden der Folie 13, durch Kleben, o. ä.

Es ist jedoch auch denkbar, wie im Verfahrensschritt 8d gezeigt, die Folie an der Oberseite der Bohle 11 mittels eines Klemmprofils 30 festzuhalten. Das Klemmprofil 30 seinerseits kann notwendige Profile, Verbindungseinrichtungen, o. ä. zum direkten Anbringen eines Solarmoduls bzw. einer Modulschiene aufweisen.

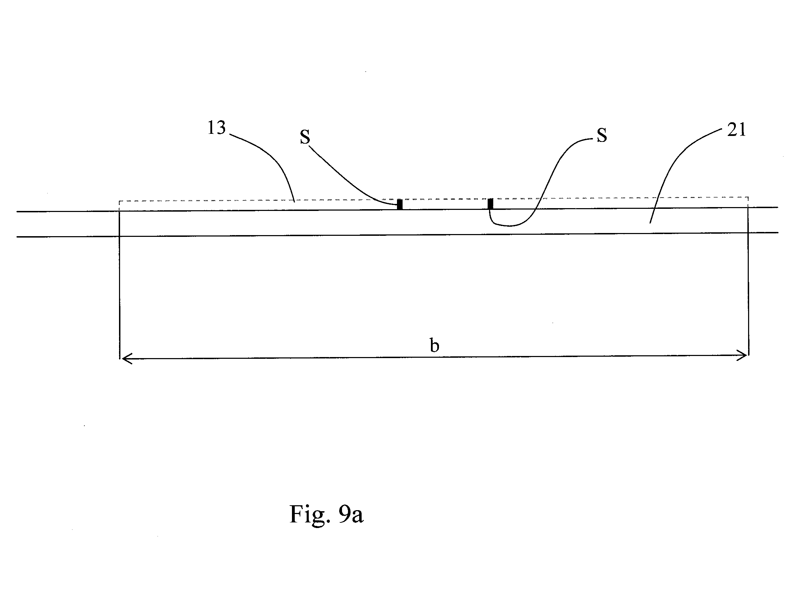

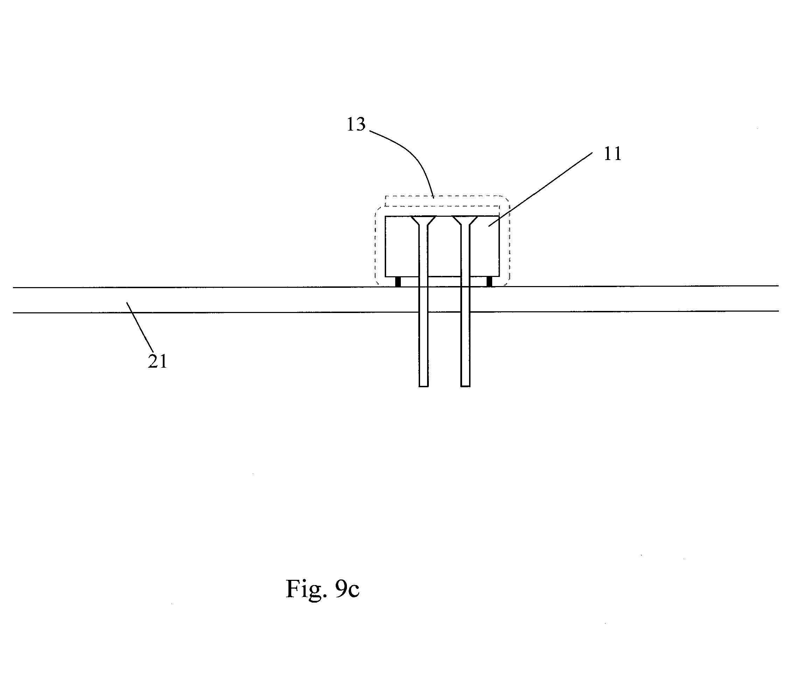

Ein weiteres Ausführungsbeispiel der Erfindung ist in den Figuren 9a und 9c dargestellt. Zunächst wird eine Folie 13 mit einer Breite b auf einer Dachfolie 21 befestigt, beispielsweise mittels zweier beabstandeter Schweißnähte S. Diese Schweißnähte können maschinell erzeugt werden und hindern Wasser, von Außen in den Bereich zwischen die Schweißnähte S einzudringen.

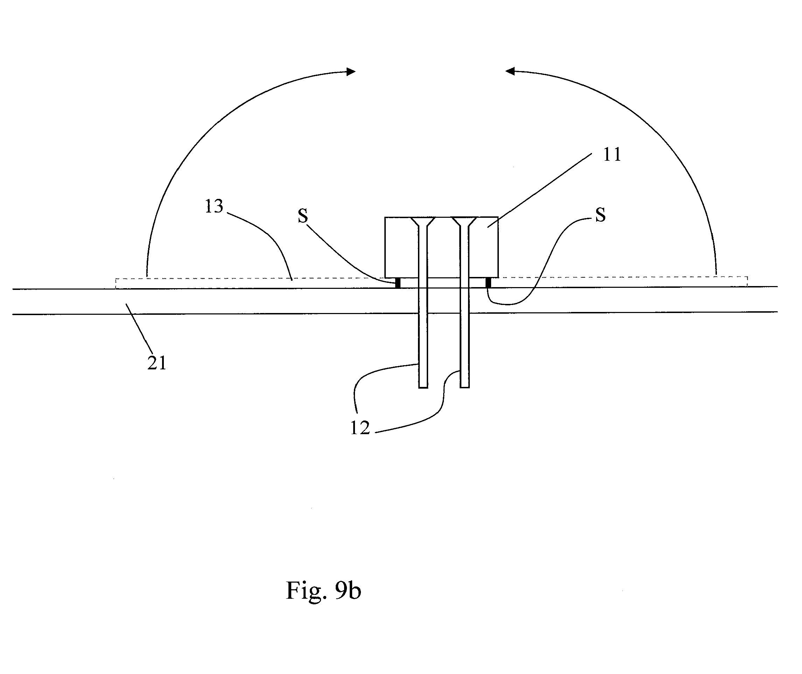

Im Verfahrensschritt 9b wird eine Bohle 11 zwischen den Schweißnähten S auf der Folie 13 angeordnet und mittels Befestigungsschrauben 12 an der Dachkonstruktion befestigt. Anschließend werden, wie in der Figur 9b durch Pfeile dargestellt, die Enden der Folie 13 auf beiden Seiten über die Bohle 11 gestülpt.

In der Figur 9c ist die festig montierte Bohle 11 dargestellt, die mittels der Folie 13, deren Enden auf der Oberseite der Bohle befestigt wurden, vor Umwelteinflüssen geschützt dargestellt.

Auf das Befestigen der Enden der Folie 13 kann im Übrigen verzichtet werden, sofern, beispielsweise durch Verschrauben, Befestigungswinkel an der Oberseite der Bohle 11 angeschraubt werden. Durch die Schraubverbindung für die Befestigungswinkel wird die Folie 13 in ihrer Position gehalten.

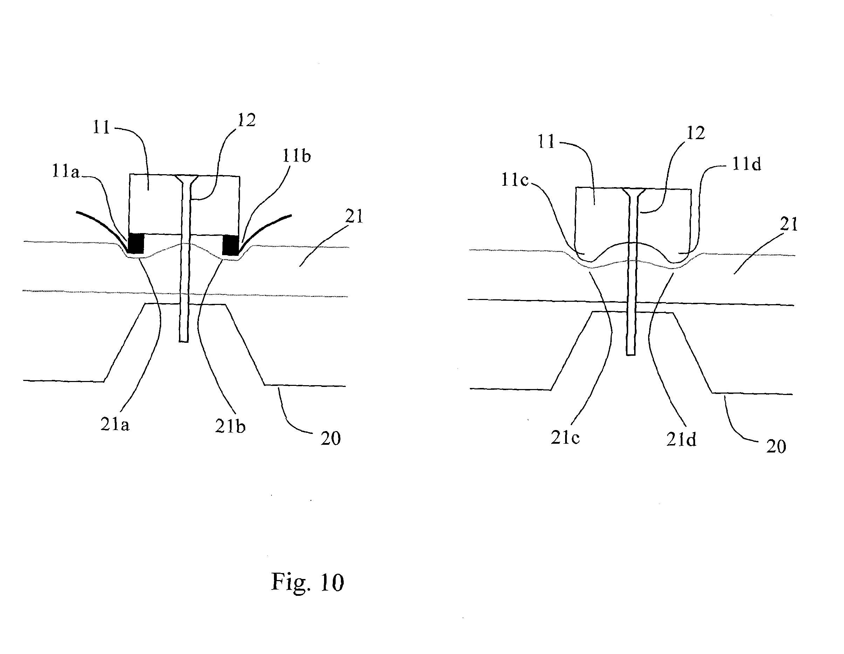

Die Figur 10 zeigt eine weitere Ausführungsform der Erfindung. Dabei weisen die Trägerelemente 11 ein Profil, z.B. Füße 11a, 11b oder Vorsprünge bzw. Nasen 11c, 11d auf die die Dachfolie 21 bei der Befestigung der Trägerelemente 11 mit Schrauben 12 am Dach 20 eindrücken und Abflussrinnen 21a, 21b bzw. 21c, 21d in der Dachfolie 21 ausbilden. Die Öffnung, durch die die Schraube 12 durch die Dachfolie 21 ragt, liegt dem gegenüber höher, so dass in den Kanälen 21a, 21b, 21c, 21d abfließendes Wasser nicht in den Bereich der Öffnung gelangen kann. Die Trägerelemente 11 können, müssen aber nicht, zusätzlich in einer Folie (nicht dargestellt) eingeschweißt sein, wie im Zusammenhang mit den anderen Ausführungsbeispielen beschrieben.

Insgesamt bietet das erfindungsgemäße Monatagesystem kaum eine Möglichkeit, dass Feuchtigkeit in den Bereich des Flachdaches 20 unter die Dachfolie 21 eindringt. Andererseits ist die Montage gegenüber bekannten Systemen vereinfacht.

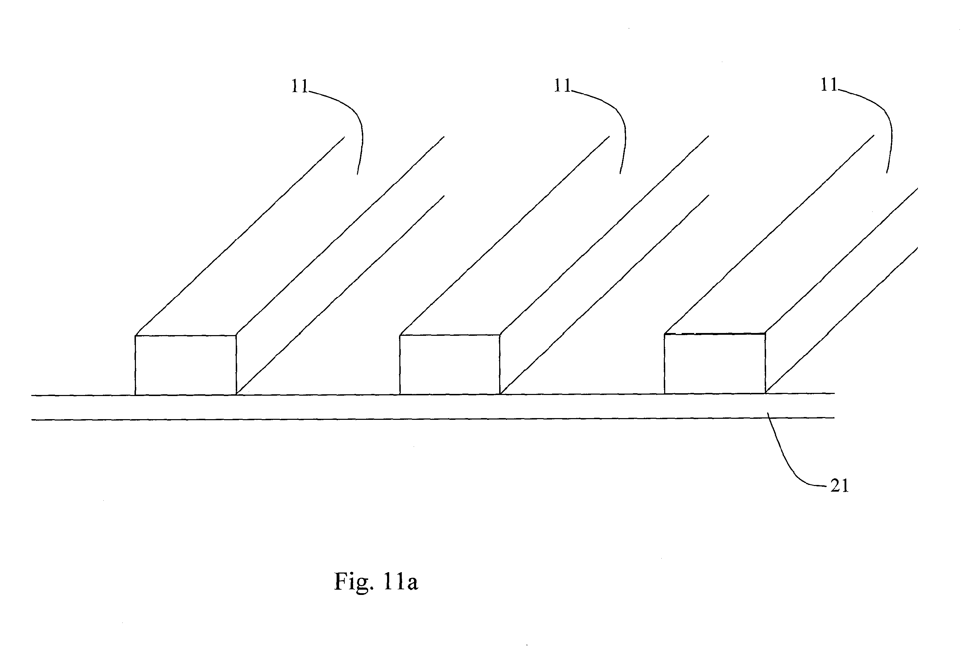

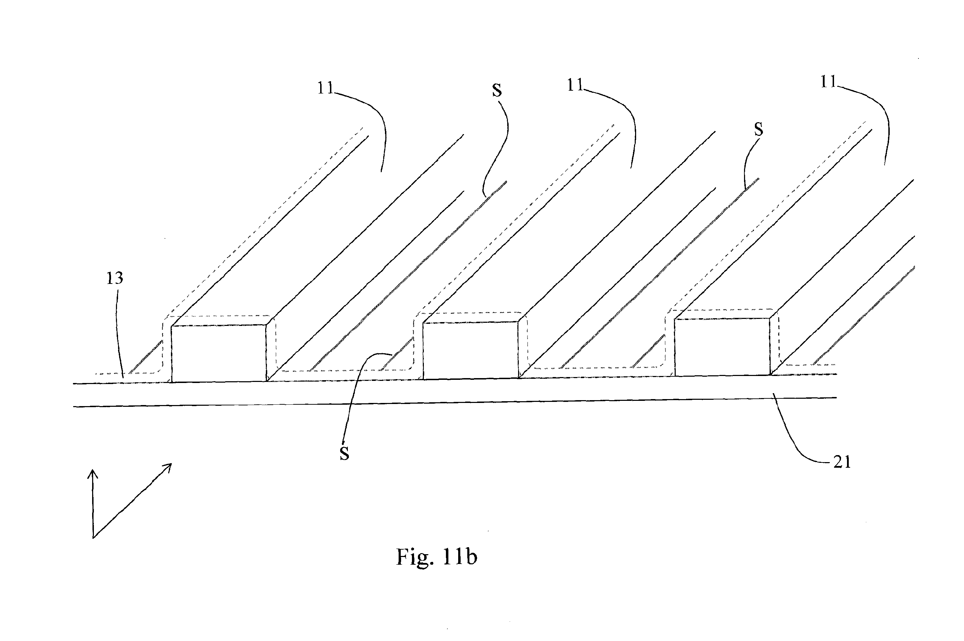

Die Figur 11 zeigt ein erstes Konzept einer erfindungsgemäßen Flachdachsanierung.

In der Praxis kommt es häufig vor, dass die Dachfolie 21 eines sanierungsbedürftigen Flachdachs ausgetauscht bzw. erneuert werden muss. Dies geschieht in der Regel durch Abnehmen der alten Dachfolie und Anbringen einer neuen Dachfolie.

Die erfindungsgemäße Dachsanierung erfolgt ohne wesentlich größeren Aufwand während der Montage von Solarmodulen auf dem Flachdach. Wie in Figur 11a dargestellt, werden zunächst Bohlen 11 auf der bisherigen Dachfolie 21 angeordnet und an der Unterkonstruktion des Dachs befestigt.

Anschließend wird, wie in der Figur 11b dargestellt, eine Dachfolie 13 bereitgestellt und über die Bohlen 11 gelegt. Die Dachfolie 13 dient als Abdeckfolie für die Bohlen 11, wie in den vorhergehenden Ausführungsbeispielen beschrieben.

Die Dachfolie 13 kann daraufhin an verschiedenen Stellen, insbesondere in Längsrichtung L des Flachdachs, an beliebigen Stellen mit der bisherigen Dachfolie 21 verschweißt werden. Die Schweißnähte S werden so angeordnet, dass einerseits ein sicherer Halt der neuen Dachfolie 13 entsteht, andererseits die Bohle 11 zuverlässig von der neuen Dachfolie 13 umschlossen werden. Der übrige Aufbau der Solarmodule erfolgt wie beispielsweise im Zusammenhang mit den Figuren 1a bis 1d beschrieben.

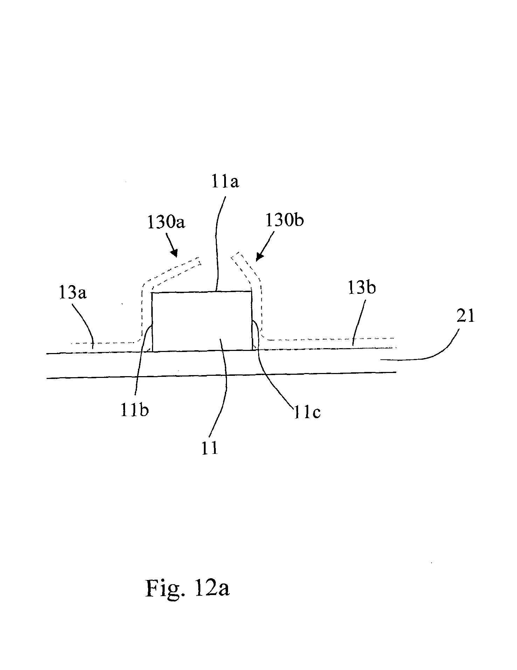

Die Figur 12a zeigt ein weiteres Konzept zur Dachsanierung im Rahmen der Montage von Solarmodulen auf einem Flachdach.

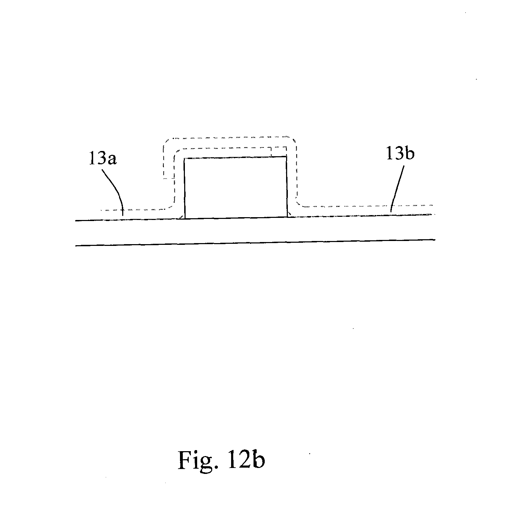

Bei diesem Verfahren wird ein erstes Folienstück 13a bereitgestellt, dessen erstes Ende 130a mindestens bis zur Seite 11b der Bohle 11 heranreicht. Dies bedeutet, dass das Ende 130a des Folienstücks 13a an der Seite 11b der Bohle 11 hoch geführt und insbesondere auf die Oberfläche 11a der Bohle 11 geführt werden kann. Von der anderen Seite der Bohle 11 wird ein weiteres Folienstück 13b mit einem freien Ende 130b herangeführt, das ebenfalls eine redundante Länge aufweist, d. h. dessen freies Ende 130b ebenfalls an der Seite 11c der Bohle 11 hoch geführt und insbesondere über die Oberfläche 11a der Bohle 11 geführt werden kann. Bei dieser Sanierungsmethode wird sichergestellt, dass die Endbereiche der Folienstücke 13a und 13b im Bereich der Bohle 11 überlappen, wie dies in der Figur 12b dargestellt ist.

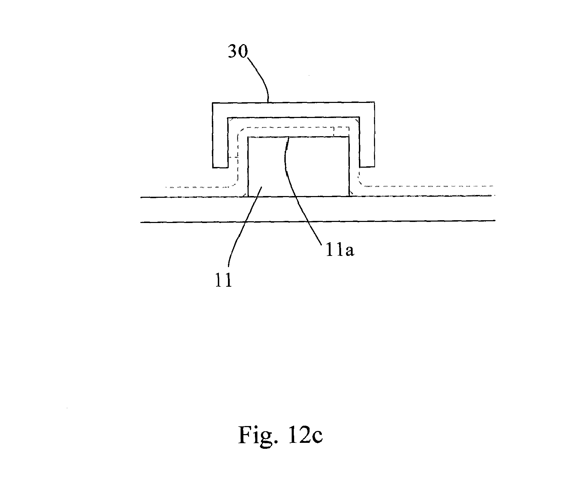

Die überlappenden Bereiche der Folien 13a und 13b können verschweißt werden. Insbesondere können die überlappenden Folienenden jedoch auch, wie in der Figur 12c dargestellt, mittels eines Klemmprofils 30 auf der Oberseite 11a der Bohle 11 befestigt werden.

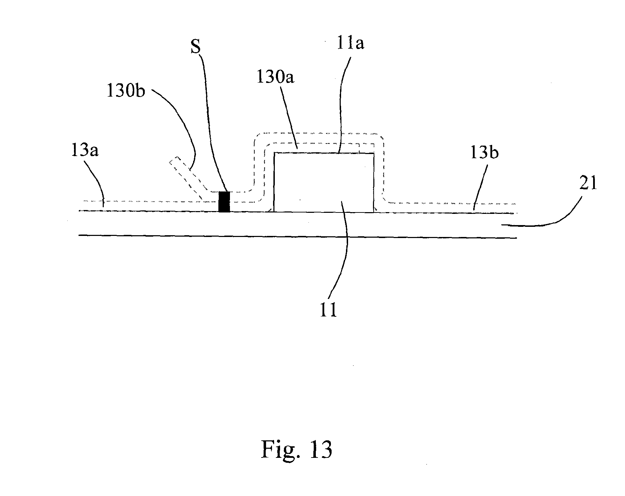

Eine weitere alternative Ausführungsform für ein Sanierungskonzept zeigt die Figur 13. In diesem Ausführungsbeispiel werden beidseitig der Bohle 11 redundant lange Folienstücke 13a und 13b bereitgestellt. Zunächst wird das freie Ende 130a des ersten Folienstücks 30a über die Oberfläche 11a der Bohle 11 geführt. Anschließend wird das freie Ende 130b des zweiten Folienstücks über die Oberfläche 11a und das freie Ende 130a des ersten Folienstücks 13a geführt. Auf der anderen Seite der Bohle 11 werden das erste Folienstück 13a, das zweite Folienstück 13b und evtl. auch die bisherige Dachfolie 21 mittels einer Schweißnaht miteinander verschweißt.

Auf diese Weise ist die Bohle 11 sicher eingeschlossen. Darüber hinaus ist die bisherige Dachfolie 21 vollständig abgedeckt, d. h. eine neue Dachfolie, die sich aus Folienstücken 13a, 13b, ... zusammensetzt, wird bereitgestellt.

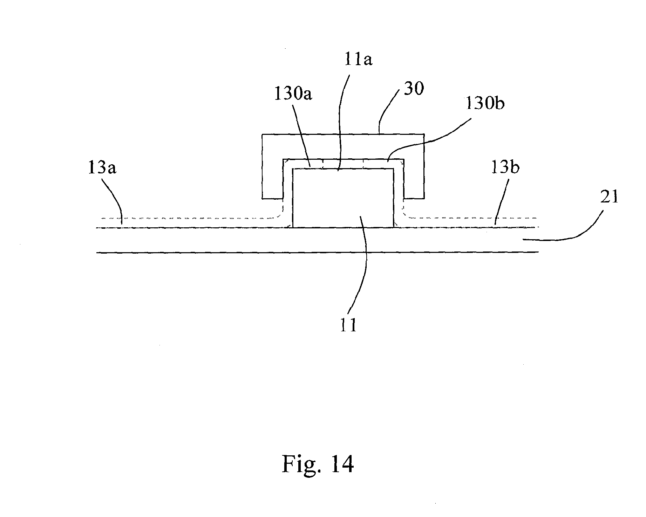

Ein weiteres Konzept zur Dachsanierung ist in der Figur 14 dargestellt. Die Figur 14 zeigt ein Konzept, bei dem zunächst eine Dachfolie 13 (nicht dargestellt) in der Größe der bisherigen Dachfolie 21 bereitgestellt wird. Die Dachfolie wird d im Bereich der Bohlen 11 in Längsrichtung L (senkrecht zur Blattebene) getrennt. Die freien Enden 130a und 130b, die wenigstens über einen Teil der Oberfläche 11a der Bohle 11 gelegt sind, werden mittels eines Klemmprofils 30 in ihrer Position gehalten.

Auf diese Weise entsteht zwischen den Bohlen eine vollständig neue Dachabdeckung. Im Bereich der Bohlen 11 wird die Lücke zwischen den Enden 130a bzw. 130b der Folienstücke 13a, 13b, ... mit Hilfe der Bohle selbst bzw. mit Hilfe des Klemmprofils 30 überbrückt.

Alternativ dazu könnten, sofern auf das Klemmprofil 30 verzichtet werden soll, die Enden 130a und 130b der Folienstücke 13a, 13b auch auf andere Weise, beispielsweise durch Verschweißen, Verkleben, etc., in jeden Fall aber möglichst durch eine wasserdichte Verbindung, an der Seitenfläche oder auf der Oberfläche 11a der Bohle 11 befestigt werden.

In sämtlichen der genannten Sanierungsverfahren für Flachdächer im Zusammenhang mit der Montage von Solarmodulen soll es selbstverständlich möglich sein, die neue Dachfolie 13 an beliebigen Stellen mit überlappenden Bereichen oder mit der bisherigen Dachfolie 21 zu verbinden, beispielsweise durch maschinelles Verschweißen.

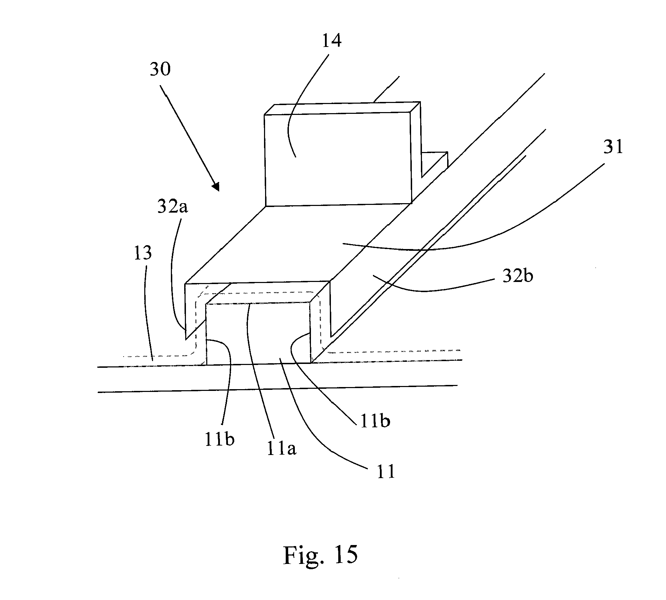

In der Figur 15 ist ein erstes erfindungsgemäßes, haubenartiges Klemm- oder Abdeckprofil 30 dargestellt, das im Zusammenhang mit allen möglichen bekannten und in dieser Anmeldung beschriebenen Ausführungsformen eingesetzt werden kann.

Das Klemmprofil 30 weist eine Oberseite 31 auf, die auf der Oberfläche 11a der Bohle 11 aufliegt und die dazwischen angeordnete Folie 13 einklemmt. Darüber hinaus weist das Klemmprofil 30 Seitenteile 32a und 32b auf, die mehr oder weniger eng an den Seitenenden 11b bzw. 11c der Bohle 11 anliegen.

Das Klemmprofil 30 weist auf der Oberseite 31 ein Verbindungselement 14 auf, das zum direkten Anbringen eines Solarmoduls oder zur Befestigung von Modulschienen, an denen die Solarmodule befestigt werden, bestimmt ist.

Mit Hilfe des Profils wird ein sicherer Halt der Folie gewährleistet. Außerdem erfolgt eine Abdichtung freiliegender Endbereiche der Folien bzw. eine Abdichtung von Bereichen, in denen die Endbereiche von Folienbahnen überlappend oder beabstandet angeordnet sind. Darüber hinaus können Öffnungen in den Bohlen, in die beispielsweise Befestigungsschrauben zur Befestigung der Bohle am Flachdach eingeführt werden, abgedeckt bzw. abgedichtet werden.

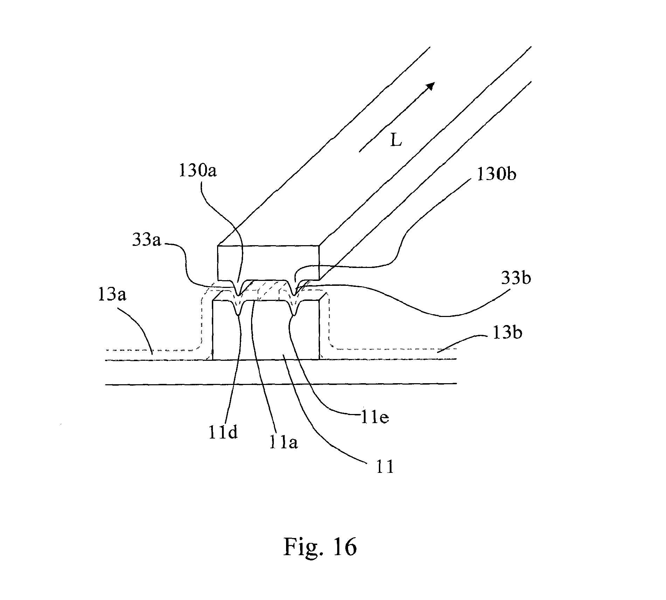

Die Figur 16 zeigt eine weitere Ausführungsform eines erfindungsgemäßen Klemmprofils 30. Dieses liegt lediglich auf der Oberseite 11 der Bohle 11 auf. An der Auflagefläche des Klemmprofils 30 sind Vorsprünge 33a und 33b ausgebildet, die in entsprechende Vertiefungen 11d und 11e an der Oberseite 11a der Bohle 11 eingreifen. Auf diese Weise kann das Klemmprofil 30 optimal justiert werden. Außerdem wird ein Verschieben des Profils 30 in seitlicher Richtung (schräg zur Längsachse L) verhindert.

Zwischen der Oberseite 11a der Bohle 11 und der Unterseite des Profils 30 kann eine beliebige Folie 13 eingeklemmt werden. In der vorliegenden Ausführungsform werden zwei Folienstücke 13a und 13b mit Endkanten 130a bzw. 130b gehalten.

Die verschiedenen Klemmprofile 30 können an ihrer Oberseite unterschiedliche Halte- und Befestigungsvorrichtungen aufweisen, beispielsweise ein Profil zum direkten Anbringen einer Modulschiene (die über ein entsprechendes Gegenprofil aufgeclipst wird), Verbindungseinrichtungen wie Winkel zum Anbringen einer Modulschiene, Verbindungen zum direkten Anbringen von Solarmodulen am Klemmprofil, etc.

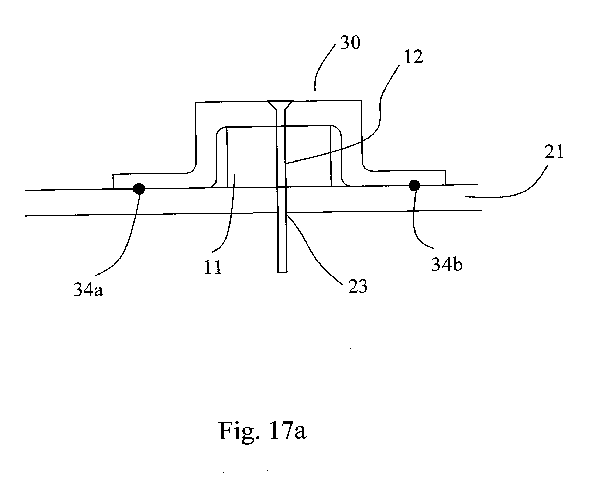

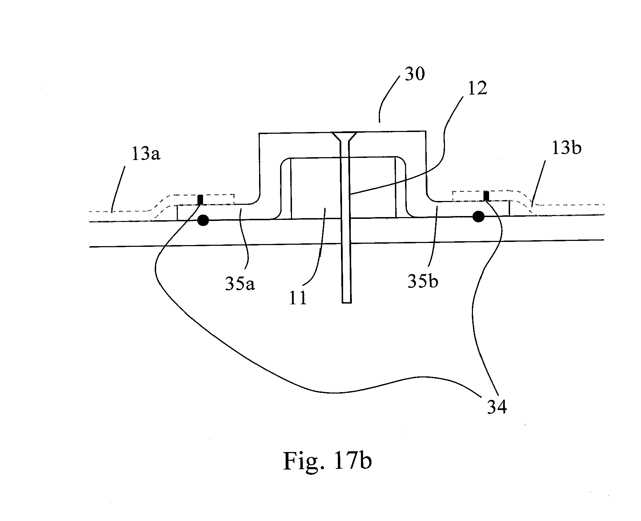

Ein weiteres Ausführungsbeispiel der Erfindung zeigen die Figuren 17a und 17b. Dabei wird ein hutartiges Profil 30 mit einem U-förmigen Abdeckbereich und beidseitig am Abdeckbereich angeordneten Seitenflanschen (Auflageflanschen) 35a, 35b bereitgestellt, das über eine Bohle 11 gelegt wird. Die Bohle 11 ist mittels Befestigungsschrauben 12, die durch Öffnungen an der Oberseite des Hutprofils 30 und in der Bohle 11 hindurchgeführt und an der Dachkonstruktion befestigt sind. Die Schraubverbindung 12 mit der Dachkonstruktion kann hergestellt werden, nachdem das Hutprofil 30 über der Bohle 11 angeordnet ist.

Das Hutprofil 30 kann an den seitlichen Vorsprüngen bzw. Seitenflanschen über eine Klebeverbindung 34a, 34b, die wasserdicht ausgebildet sein kann, mit der Dachfolie 21 verklebt sein.

In der dargestellten Ausführungsform ist das Hutprofil 30 zuerst angeordnet und die Bohle 11 anschließend verschraubt worden. Es ist jedoch auch denkbar, die Bohle 11 zuerst zu verschrauben und anschließend das Hutprofil 30 anzuordnen. In diesem Fall wäre die Öffnung für die Befestigungsschrauben 12 in der Bohle 11 vom Hutprofil abgedeckt.

Wie in der Figur 17b dargestellt, kann vorzugsweise anschließend eine Folie 13a, 13b seitlich über die Auflageflansche 35a, 35b des Hutprofils 30 gelegt und verschweißt bzw. verklebt werden, um den Spalt zwischen den Seitenflanschen 35a, 35b und der darunter liegenden Dachfolie abzudichten.

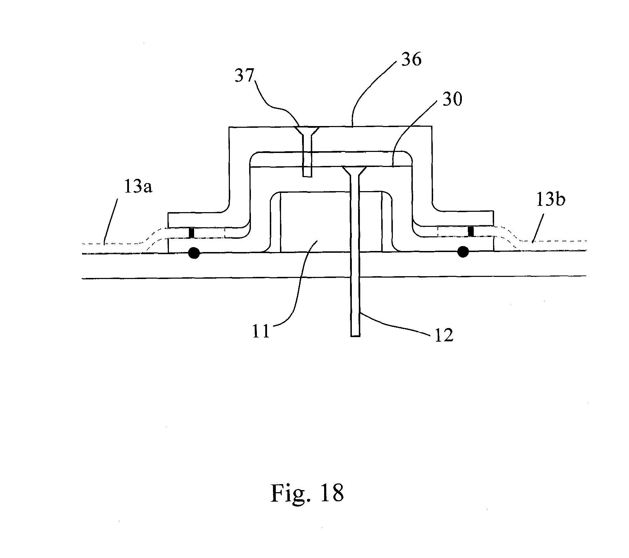

Die Figur 18 zeigt eine weitere Ausführungsform eines Montagesystems mit Profilen. Die Konstruktion weist ein unteres Hutprofil 30 auf. Dieses ist zusammen mit der darunter liegenden Bohle 11 über eine Schraubverbindung 12 mit der Dachkonstruktion verbunden. Anschließend wird ein oberes Hutprofil 36 über dem unteren Hutprofil 30 angeordnet. Das obere Hutprofil 36 wird mittels eines Befestigungselements 37, beispielsweise einer Schraube, am unteren Hutprofil 30 und/oder an der Bohle 11 befestigt.

Zwischen den Auflageflanschen der Hutprofile sind beidseitig der Bohle 11 Folienenden 13a und 13b eingeklemmt. Auf diese Weise drückt das obere Hutprofil 36 auf die Folienenden 13a, 13b, um zusätzliche Dichtigkeit zu erreichen. Die zwischen den Flanschen der Profile 30 und 37 liegenden Folienenden 13a und 13b können wahlweise nur eingeklemmt oder zusätzlich befestigt, z.B. verschweißt oder verklebt, sein.

Statt dem unteren Hutprofil 30 und der Bohle 11 könnte auch eine Bohle 11 verwendet werden, die, ähnlich wie das Hutprofil 30, ein- oder beidseitig seitliche Auflageflansche aufweist, so dass dort Folienenden befestigt werden können. Das obere Hutprofil 37 ist rein optional, d.h. die wie beschrieben ausgebildete Bohle 11 kann in jeder der beschriebenen Ausführungsformen eingesetzt werden, sei es mit oder ohne dem oberen Hutprofil 37.

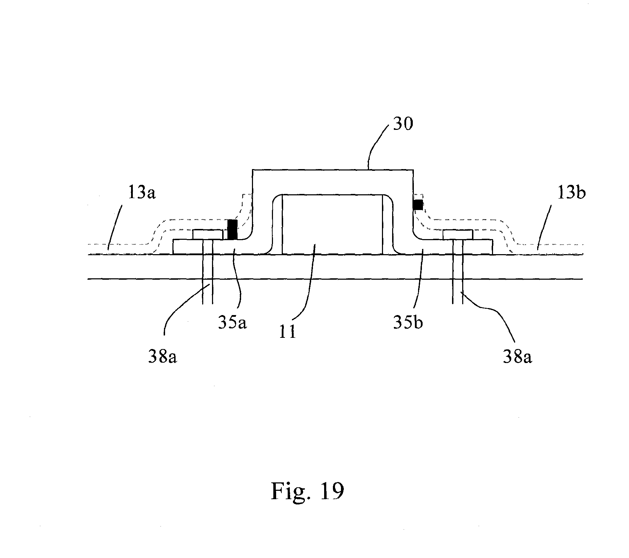

In der Figur 19 ist eine weitere Ausführungsform der Erfindung dargestellt. Über einer Bohle 11 wird ein Hutprofil 30 angeordnet, das beidseitig Auflageflansche 35a und 35b aufweist. In dieser Ausführungsform wird das Hutprofil 30 mit Befestigungsschrauben 38a, 38b an der Dachunterkonstruktion befestigt, die durch die Auflageflansche 35a, 35b hindurch geführt sind. Das Profil 30 wird somit über die Flansche 35a, 35b fixiert. Eine zusätzliche Befestigung der Bohle 11 kann vorgesehen sein, erübrigt sich jedoch bei dieser Konstruktion in der Regel.

Über die Auflageflansche 35a, 35b werden beidseitig Endbereiche 13a, 13b von Folien gelegt, um den Bereich der Befestigungen 38a und 38b und/oder den Spalt zwischen den Auflageflanschen 35a bzw. 35b und der darunter liegenden Dachfolie 21 abzudecken. Die Folienenden 13a, 13b können beispielsweise mit dem Hutprofil 30 verklebt oder verschweißt werden. Die Lage der Schweißnaht kann, wie an den beiden Seiten des Profils 30 angedeutet, an beliebiger, geeigneter Stelle am Profil 30 angeordnet sein.

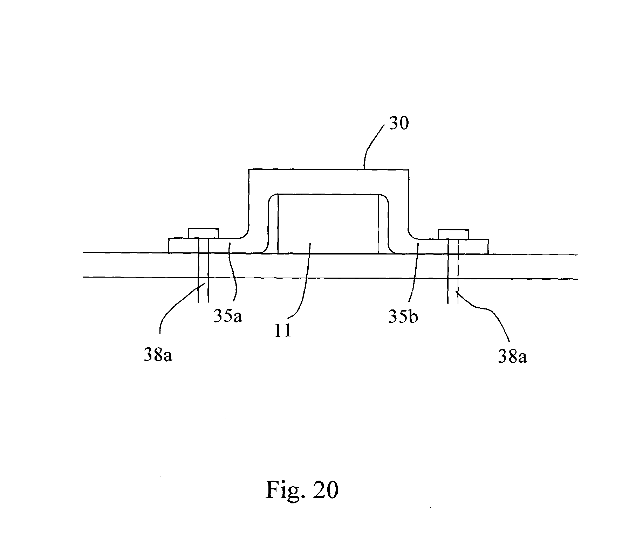

In der Ausführungsform gemäß der Figur 20 ist ein Hutprofil 30 mit einer darunter liegenden Bohle 11 dargestellt. Das Hutprofil 30 ist über die seitlich angeordneten Auflageflansche 35a und 35b mittels vorzugsweise dichtender Schrauben 38a bzw. 38b mit der Dachunterkonstruktion verschraubt. Außerdem können die Auflageflansche 35a und 35b zum Abdichten des Spalts zwischen den Auflageflanschen 35a bzw. 35b und der darunter liegenden Dachfolie 21 mit dieser verschweißt oder verklebt sein. Das Vorsehen einer Folie zur zusätzlichen Abdichtung erübrigt sich bei dieser Ausführungsform.

Die beschriebenen Hutprofile können in ihrer Längsrichtung (senkrecht zur Blattebene) über die volle Länge oder in Abschnitten entlang des Trägerelements erstrecken.

Für die beschriebenen Merkmale soll sowohl einzeln als auch in Kombination mit allen anderen beschriebenen Merkmalen Schutz beansprucht werden, soweit die Merkmale für den Fachmann offensichtlich sinnvoll kombiniert werden können. So sollen Merkmale aus einzelnen beschriebenen Ausführungsformen ohne weiteres kombiniert werden können.

## Patentansprüche

1. Montagesystem (10) zur Montage von Solarmodulen auf der Dachabdeckung (21) eines Dachs, insbesondere eines Flachdachs, umfassend:
ein Profil (30), das auf der Dachabdeckung (21) angeordnet ist; und
wenigstens ein Systemdichtelement (13),
**dadurch gekennzeichnet, dass**
das Profil (30) einen Mittelabschnitt und beidseitig sich vom Mittelabschnitt erstreckende Seitenflansche (35a, 35b) aufweist, wobei der Mittelabschnitt gegenüber den Seitenflanschen (35a, 35b) erhöht ausgebildet ist.

2. Montagesystem (10) nach Anspruch 1, **dadurch gekennzeichnet, dass** das Systemdichtelement (13) als wasserdichte Folie ausgebildet ist.

3. Montagesystem (10) nach Anspruch 1 oder 2, **dadurch gekennzeichnet, dass** das Systemdichtelement (13) wenigstens ein freies Ende aufweist, das über wenigstens einen der Seitenflansche (35a, 35b) geführt ist.

4. Montagesystem (10) nach einem der vorhergehenden Ansprüche, **dadurch gekennzeichnet, dass**
das Montagesystem zwei Systemdichtelemente (13a, 13b) mit jeweils einem freien Ende und einem Endbereich aufweist, wobei der Endbereich jeweils eines der Systemdichtelemente (13a, 13b) mit jeweils einem der Seitenflansche (35a, 35b) überlappend angeordnet und jeweils auf einen Seitenflansch (35a, 35b) geführt ist.

5. Montagesystem (10) nach einem der vorhergehenden Ansprüche, **dadurch gekennzeichnet, dass**
der Mittelabschnitt einen Aufnahmeraum für ein Trägerelement (11) bildet.

6. Montagesystem (10) nach einem der vorhergehenden Ansprüche, **dadurch gekennzeichnet, dass**
der Mittelabschnitt U-förmig ausgebildet ist.

7. Montagesystem (10) nach einem der vorhergehenden Ansprüche, **dadurch gekennzeichnet, dass**
der Mittelabschnitt in Form eines umgekehrten U's auf der Dachfolie (21) angeordnet ist.

8. Montagesystem (10) nach einem der vorhergehenden Ansprüche, **dadurch gekennzeichnet, dass**
das Montagesystem wenigstens ein Trägerelement (11) aufweist, das auf der Dachabdeckung (21) angeordnet ist und vom Profil wenigstens teilweise umschlossen wird.

9. Montagesystem (10) nach einem der vorhergehenden Ansprüche, **dadurch gekennzeichnet, dass**
das Montagesystem wenigstens ein Befestigungsmittel (12) zum Befestigen des Profils (30) und/oder des Trägerelements (11) am Dach aufweist.

10. Montagesystem (10) nach einem der vorhergehenden Ansprüche, **dadurch gekennzeichnet, dass**
das Profil und/oder das Trägerelement (11) wenigstens eine Öffnung für die Befestigungsmittel (12) aufweisen.

11. Montagesystem (10) nach Anspruch 10, **dadurch gekennzeichnet, dass** die wenigstens eine Öffnung im Mittelabschnitt und/oder in den Seitenflanschen (35a, 35b) angeordnet ist.

12. Montagesystem (10) nach Anspruch 10 oder 11, **dadurch gekennzeichnet, dass** der Endbereich wenigstens eines der Systemdichtelemente (13a, 13b) wenigstens eine der Öffnungen des Profils (30) und/oder wenigstens ein Befestigungsmittel (12) überdeckt.

13. Montagesystem (10) nach einem der vorhergehenden Ansprüche, **dadurch gekennzeichnet, dass**
sich die Seitenflansche (35a, 35b) seitlich und/oder im Wesentlich waagerecht von den freien Enden der Schenkel des U-förmigen Mittelabschnitts des Profils (30) erstrecken.

14. Montagesystem (10) nach einem der vorhergehenden Ansprüche, **dadurch gekennzeichnet, dass**
sich die Seitenflansche (35a, 35b) beidseitig von den freien Enden der Schenkel des U-förmigen Mittelabschnitts des Profils (30) erstrecken.

15. Montagesystem (10) nach einem der vorhergehenden Ansprüche, **dadurch gekennzeichnet, dass**
das Profil (30) mit der Dachabdeckung (21) verbunden ist, insbesondere verklebt oder verschweißt ist.
